# EUROPEAN PATENT APPLICATION

(11) **EP 4 459 379 A1**
(43) Date of publication of application: **06.11.2024**
(21) Application number: 22907565.0
(22) Date of filing: 19.12.2022
(51) Int. Cl.: G03H 1/02, B32B 7/023, B32B 27/00, B42D 25/328

(54) **VOLUME HOLOGRAM LAMINATE, METHOD FOR PRODUCING VOLUME HOLOGRAM LAMINATE, VOLUME HOLOGRAM TRANSFER FOIL, VOLUME HOLOGRAM LABEL, VOLUME HOLOGRAM SHEET FOR EMBEDDING, CARD, AND HOLOGRAM STICKER-TYPE PRODUCT**

(30) Priority: 17.12.2021 JP 2021204859
(71) Applicant: Dai Nippon Printing Co., Ltd., Tokyo 162-8001 (JP)
(72) Inventor: YOSHIMURA, Yukihiro, Tokyo 162-8001 (JP); AZAKAMI, Minoru, Tokyo 162-8001 (JP)
(74) Representative: Müller-Boré & Partner Patentanwälte PartG mbB
(86) International application number: PCT/JP2022/046586
(87) International publication number: WO 2023/113043

(57) **Abstract**

The present disclosure provides a volume hologram laminate comprising a substrate, and a volume hologram laminate portion placed on one surface of the substrate, wherein the volume hologram laminate portion includes, from a substrate side, a resin layer including transparent resin; an inhibiting layer placed in a pattern form, in contact with the resin layer; and a volume hologram layer, on which an interference fringe is recorded, placed in contact with the resin layer and the inhibiting layer, in this order, and an inhibiting layer-formed region including the inhibiting layer and an inhibiting layer-non-formed region including no inhibiting layer differ in a color of a reproduction image from the volume hologram layer.

## Description

### Technical Field

The present disclosure relates to a volume hologram laminate including a volume hologram layer on which an interference fringe is recorded, and a method for producing a volume hologram laminate, and also to a volume hologram transfer foil, a volume hologram label, a volume hologram sheet to be embedded, a card, and a hologram-adhered article using the volume hologram laminate.

### Background Art

A hologram is obtained by interfering two lights having the same wavelengths (object light and reference light), and recording the wavefront of the object light, as an interference fringe, on a photosensitive material. When this hologram is irradiated with the light of the same conditions as the reference light for recording the interference fringe, a diffraction phenomenon due to the interference fringe occurs, and the wavefront identical to the original object light may be reproduced. Since holograms have the advantage of having a beautiful appearance and relatively difficult to replicate, they are often used for, for example, security purposes.

Holograms may be classified into several types depending on the recording form of the interference fringes, and typically, they may be classified into surface relief holograms and volume holograms. The surface relief hologram is a hologram wherein a fine unevenness pattern is shaped on the surface of the hologram layer.

Meanwhile, in the volume hologram, interference fringes produced by light interference are recorded three-dimensionally in the thickness direction, as fringes with different refractive indexes. The volume hologram is more difficult to replicate than the surface relief hologram since the image is recorded by the refractive index difference of the materials.

Volume holograms may be mass-produced industrially using a hologram original plate. Therefore, by using the volume hologram itself as the original plate, closely adhering the photosensitive material for replication to the volume hologram, and irradiating a laser from the photosensitive material side, it is possible to replicate the volume hologram.

Therefore, a volume hologram having excellent forgery preventing effect is desired. Also, a high designability is desired for holograms.

In view of the above background, for example, Patent Document 1 discloses a technique for producing a partially color-shifted (red-shifted) volume hologram wherein a color shift resin layer is partially applied and formed on a substrate, a volume hologram recording material layer is applied and formed on the resin layer, and then, a volume hologram is recorded and heated. However, the technical difficulty of applying hologram photosensitive material on the color shift resin layer is high. Also, in Patent Document 1, the interference fringe is formed in the color shift resin layer since the volume hologram is recorded after applying and forming the hologram recording material layer on the resin layer.

Patent Document 2 discloses a process for altering the wavelength response of a volume phase reflection to the longer wavelength side by, after photographing the volume hologram, contacting a diffusion element containing monomer with the volume hologram layer, migrating the monomer into the hologram layer by an exposure, and swelling. Patent Document 2 discloses that the shift amount may be adjusted (large red shift when the exposure amount is small, and no color shift when the exposure amount is large) according to the degree (time) of exposure, and thereby multicolor holograms may be formed. Meanwhile, the technical difficulty of the production of the color shift layer is high.

### Citation List

### Patent Documents

Patent Document 1: Japanese Patent Application Laid-Open (JP-A) No. 2009-104099
Patent Document 2: JP-A No. H05-204288

### Summary of Disclosure

### Technical Problem

The present disclosure has been made in view of the above circumstances, and a main object of the present disclosure is to provide a volume hologram laminate having excellent forgery preventability and designability.

### Solution to Problem

One embodiment of the present disclosure provides a volume hologram laminate comprising a substrate, and a volume hologram laminate portion placed on one surface of the substrate, wherein the volume hologram laminate portion includes, from a substrate side, a resin layer including transparent resin; an inhibiting layer placed in a pattern form, in contact with the resin layer; and a volume hologram layer, on which an interference fringe is recorded, placed in contact with the resin layer and the inhibiting layer, in this order, and an inhibiting layer-formed region including the inhibiting layer and an inhibiting layer-non-formed region including no inhibiting layer differ in a color of a reproduction image from the volume hologram layer.

Another embodiment of the present disclosure provides a method for producing a volume hologram laminate, the method comprising: a step of producing a resin layer side member by forming a resin layer, including transparent resin, on a first substrate, and forming an inhibiting layer, in a pattern form, on the resin layer so as to be in contact with the resin layer; a step of producing a volume hologram layer side member by forming a volume hologram layer, including a photopolymerizable compound and a photopolymerization initiator, on a second substrate, and recording an interference fringe on the volume hologram layer; a step of stacking the resin layer side member and the volume hologram layer side member so that the resin layer and the inhibiting layer in the resin layer side member and the volume hologram layer in the volume hologram layer side member are in contact; and a step of heating a stack of the resin layer side member and the volume hologram layer side member.

Another embodiment of the present disclosure provides a volume hologram transfer foil comprising: the volume hologram laminate described above; and a heat sealing layer placed on a volume hologram laminate portion side surface of the volume hologram laminate.

Another embodiment of the present disclosure provides a volume hologram label comprising: the volume hologram laminate described above; and an adhesive layer placed on a volume hologram laminate portion side surface of the volume hologram laminate.

Another embodiment of the present disclosure provides a volume hologram sheet to be embedded comprising: the volume hologram laminate described above; a first heat sealing layer placed on a volume hologram laminate portion side surface of the volume hologram laminate; and a second heat sealing layer placed on a substrate side surface of the volume hologram laminate.

Another embodiment of the present disclosure provides a card comprising a core sheet; an adhesive layer; the volume hologram laminate described above; and a transparent sheet, in this order.

Another embodiment of the present disclosure provides a hologram-adhered article comprising an adherend, and a volume hologram laminate portion placed on one surface of the adherend via a heat sealing layer, wherein the volume hologram laminate portion includes, from a side opposite to an adherend side, a resin layer including transparent resin; an inhibiting layer placed in a pattern form, in contact with the resin layer; and a volume hologram layer, on which an interference fringe is recorded, placed in contact with the resin layer and the inhibiting layer, in this order, and an inhibiting layer-formed region including the inhibiting layer and an inhibiting layer-non-formed region including no inhibiting layer differ in a color of a reproduction image from the volume hologram layer.

### Advantageous Effects of Disclosure

According to the present disclosure, a volume hologram laminate having excellent forgery preventability and designability may be provided.

### Brief Description of Drawings

FIG. 1 is a schematic cross-sectional view illustrating an example of a volume hologram laminate in the present disclosure.
FIG. 2 is a reproduction image of a volume hologram laminate in the present disclosure.
FIGS. 3 are process drawings illustrating an example of a method for producing a volume hologram laminate in the present disclosure.
FIG. 4 is a schematic cross-sectional view illustrating an example of a volume hologram transfer foil in the present disclosure.
FIGS. 5 are schematic cross-sectional views illustrating an example of a volume hologram transfer foil in the present disclosure.
FIG. 6 is a schematic cross-sectional view illustrating an example of a volume hologram label in the present disclosure.
FIG. 7 is a schematic cross-sectional view illustrating an example of a hologram sheet to be embedded in the present disclosure.
FIGS. 8 are a schematic plan view and a schematic cross-sectional view illustrating an example of a card in the present disclosure.
FIG. 9 is a schematic cross-sectional view illustrating an example of a card in the present disclosure.
FIG. 10 is a schematic cross-sectional view illustrating an example of a hologram-adhered article in the present disclosure.

### Description of Embodiments

Embodiments in the present disclosure are hereinafter explained with reference to, for example, drawings. However, the present disclosure is enforceable in a variety of different forms, and thus should not be taken as is limited to the contents described in the embodiments exemplified as below. Also, the drawings may show the features of the present disclosure such as width, thickness, and shape of each part schematically comparing to the actual form in order to explain the present disclosure more clearly in some cases; however, it is merely an example, and thus does not limit the interpretation of the present disclosure. Also, in the present descriptions and each drawing, for the factor same as that described in the figure already explained, the same reference sign is indicated and the detailed explanation thereof may be omitted.

In the present descriptions, in expressing an aspect wherein some member is placed on the other member, when described as merely "on" or "below", unless otherwise stated, it includes both of the following cases: a case wherein some member is placed directly on or directly below the other member so as to be in contact with the other member, and a case wherein some member is placed on the upper side or the lower side of the other member via yet another member. Also, in the present descriptions, on the occasion of expressing an aspect wherein some member is placed on the surface of the other member, when described as merely "on the surface", unless otherwise stated, it includes both of the following cases: a case wherein some member is placed directly on or directly below the other member so as to be in contact with the other member, and a case wherein some member is placed on the upper side or the lower side of the other member via yet another member.

Also, in the present descriptions, a member referred to as "film" is included in "sheet". Also, a member referred to as "sheet" is included in "film".

A volume hologram laminate, a method for producing a volume hologram laminate, a volume hologram transfer foil, a volume hologram label, a volume hologram sheet to be embedded, a card, and a hologram-adhered article in the present disclosure will be hereinafter described in detail.

### A. Volume hologram laminate

The volume hologram laminate in the present disclosure comprises a substrate, and a volume hologram laminate portion placed on one surface of the substrate, wherein the volume hologram laminate portion includes, from a substrate side, a resin layer including transparent resin; an inhibiting layer placed in a pattern form, in contact with the resin layer; and a volume hologram layer, on which an interference fringe is recorded, placed in contact with the resin layer and the inhibiting layer, in this order, and an inhibiting layer-formed region including the inhibiting layer and an inhibiting layer-non-formed region including no inhibiting layer differ in a color of a reproduction image from the volume hologram layer.

Here, in the present disclosure, being different in the color of the reproduction image refers to the case where ΔE₀₀ measured by a color luminance meter is 20 or more.

The method for measuring the ΔE₀₀ is as follows.

In other words, ΔE₀₀ is obtained from L*a*b* wherein a measurement sample is measured with a color luminance meter in a darkroom environment. The color luminance meter is provided in the 0° direction relative to the normal direction of the measurement sample; the measurement sight in the measurement sample is fixed; the L*a*b* of the diffraction light is measured by varying the angle of the light source by 1° from 15° to 65°; and using the L*a*b* of the angle exhibiting the highest L* value, ΔE₀₀ is calculated using the calculating formula described in JIS Z 8781 Part 6 (CIEDE2000 color difference formula). As the color luminance meter, BM-7 from Topcon Corporation is used, and Xenon light source XL075 from Hoya Corporation (former Hoya-Schott Corporation) is used as the light source.

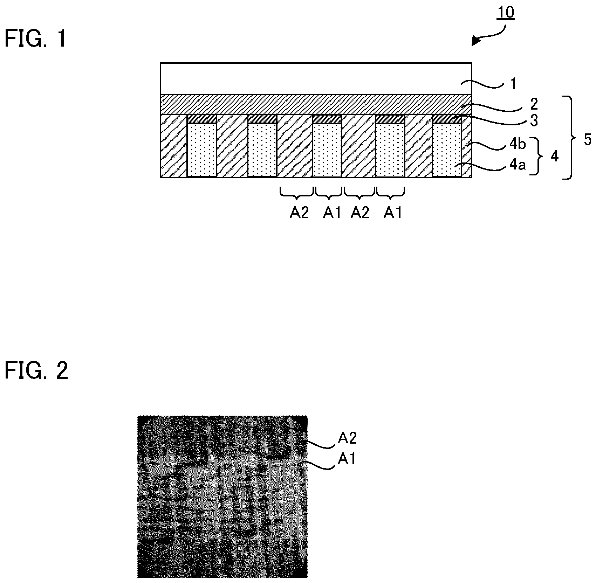

The volume hologram laminate in the present disclosure is explained, referring to drawings. FIG. 1 is a schematic cross-sectional view illustrating an example of a volume hologram laminate in the present disclosure. As shown in FIG. 1, the volume hologram laminate 10 includes a substrate 1 and a volume hologram laminate portion 5 placed on one surface of the substrate 1. The volume hologram laminate portion 5 includes, from a substrate 1 side, a resin layer 2 including transparent resin; an inhibiting layer 3 placed partially, in a pattern form in a plan view, in contact with the resin layer 2; and a volume hologram layer 4, on which an interference fringe is recorded, placed in contact with the resin layer 2 and the inhibiting layer 3, in this order. In the volume hologram laminate in the present disclosure, an inhibiting layer-formed region A1 including the inhibiting layer 3 and an inhibiting layer-non-formed region A2 including no inhibiting layer 3 differ in a color of a reproduction image from the volume hologram layer 4.

In the present disclosure, the reproduction wavelength of the inhibiting layer-non-formed region A2 is preferably shifted to the shorter wavelength side than the reproduction wavelength of the inhibiting layer-formed region A1. In the production of a volume hologram laminate, after recording interference fringe on the volume hologram layer, the resin layer and inhibiting layer in a pattern form are placed so as to be in contact with the volume hologram layer, and the stacked body is subjected to a heating treatment. In doing so, in the inhibiting layer-non-formed region A2, the low molecular material, such as uncured photopolymerizable compound included in the volume hologram layer, is migrated into the resin layer so that the volume hologram layer is shrunk and the distance between the interference fringes are narrowed.

Here, whether the reproduction wavelength of the inhibiting layer-non-formed region is shifted to the shorter wavelength side than the reproduction wavelength of the inhibiting layer-formed region, or not may be determined by the following measurement.

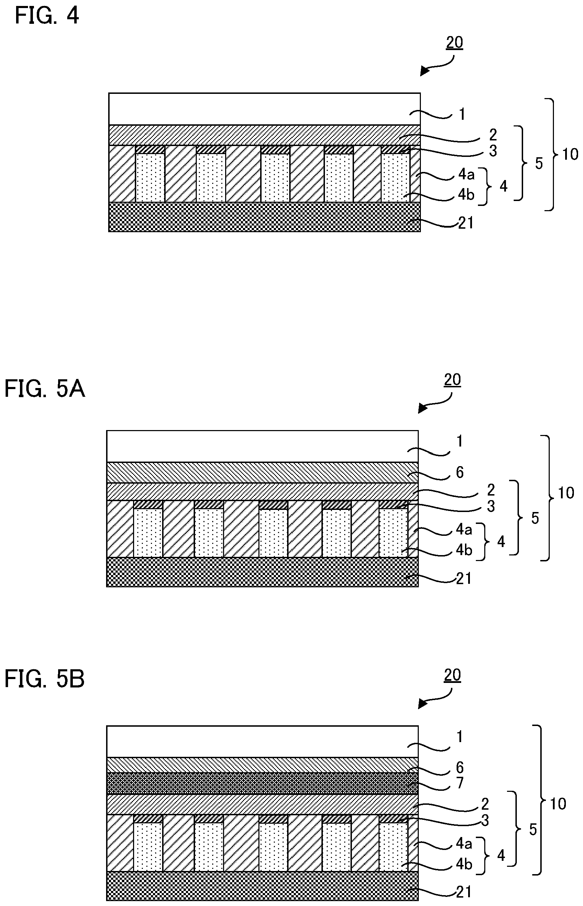

In other words, a volume hologram laminate including a substrate is prepared and measured by the following spectral transmittance measurement method.
a) A spectrometer: USB4000 (from Ocean Optics) and light source: MEGALIGHT100 (from Schott AG) are used to obtain the 0 order spectral transmittance distribution (JIS Z 8791 5.5.4 Fig. 4), and the peak wavelength is determined.
b) The light from the light source is injected from the volume hologram layer side, and measurement is carried out with incident angle of 0°.

It is decided by comparing the reproduction wavelengths of the inhibiting layer-non-formed region and inhibiting layer-formed region measured by the measurement method described above.

FIG. 2 is an observation diagram illustrating an example of a reproduction image of a volume hologram laminate in the present disclosure. In the volume hologram laminate, the color of the reproduction image of the inhibiting layer-formed region A1 where the inhibiting layer is stacked (substrate 1/resin layer 2/inhibiting layer 3/volume hologram layer 4a) is green, and the color of the reproduction image of the inhibiting layer-non-formed region A2 where the inhibiting layer is not stacked (substrate 1/resin layer 2/volume hologram layer 4b) is blue.

In volume holograms, when the interference fringe is recorded using a monochromatic laser light, the reproduced image is usually monochromatic. In contrast to this, in the volume hologram laminate in the present disclosure, the inhibiting layer-formed region including the inhibiting layer and an inhibiting layer-non-formed region including no inhibiting layer differ in a color of the reproduction image from the volume hologram layer, regardless of the interference fringe is recorded using a monochromatic laser light. That is, this results in a volume hologram laminate with two different response wavelengths and a multi-colored reproduction image may be obtained. Therefore, a volume hologram laminate having excellent forgery preventability and designability may be obtained.

Also, in the production of a volume hologram laminate in the present disclosure, after the interference fringe is recorded on the volume hologram layer, for example, the volume hologram layer is placed so as to be in contact with the inhibiting layer and resin layer, and the heating step is carried out. In this step, a volume hologram laminate may be produced by migrating the low molecular material, such as uncured photopolymerizable compound included in the volume hologram layer, into the resin layer in the inhibiting layer-non-formed region, and preventing the low molecular material from being migrated into the resin layer in the inhibiting layer-formed region. As described above, a volume hologram laminate having excellent forgery preventability and designability may be obtained by a simple method. Therefore, color variations of the volume hologram laminates may be increased without the need for a new equipment.

### I. Volume hologram laminate portion

The volume hologram laminate portion in the present disclosure is placed on one surface of the substrate, and includes, from a substrate side, a resin layer including transparent resin; an inhibiting layer placed in a pattern form, in contact with the resin layer; and a volume hologram layer, on which an interference fringe is recorded, placed in contact with the resin layer and the inhibiting layer, in this order.

### 1. Inhibiting layer

The inhibiting layer in the present disclosure is placed in a pattern form, in contact with the resin layer. The inhibiting layer is a layer configured to prevent the migration of the low molecular material such as uncured photopolymerizable compound included in the volume hologram layer, particularly cation polymerizable compound, into the resin layer during the production of the volume hologram laminate.

Here, "placed in a pattern form" refers to a partially placed state, and in a pattern state in a plan view. Also, the pattern in the present disclosure may be a letter, a number, a symbol, a figure, a picture, a design pattern, or any other shape according to the design thereof.

The material of the inhibiting layer may include organic material and inorganic material capable of inhibiting the migration of low molecular material during the production of the volume hologram laminate, and capable of being formed in a pattern.

The organic material is preferably resin. Among them, water-soluble resin is preferable. This is because low molecules such as photopolymerizable compound or monomers are difficult to dissolve with the inhibiting layer and to diffuse into the inhibiting layer. Specific examples of the water-soluble resin may include a polyvinylalcohol resin, an ethylene-vinylalcohol copolymer resin, and a polyvinyl pyrrolidone resin. In particular, the polyvinyl alcohol is preferably included.

Examples of the inhibiting layer including inorganic material may include inorganic vapor deposition layers. Examples of the inorganic compound forming the transparent inorganic vapor deposition layer may include inorganic oxides, inorganic nitrides, and inorganic carbides.

Metal elements are preferable as the inorganic element; specific examples of the metal element may include aluminum (Al), silicon (Si), magnesium (Mg), titanium (Ti), lead (Pb), zirconium (Zr), yttrium (Y), zinc (Zn), vanadium (V), barium (Ba) and chromium (Cr); and one type or two types or more of the above inorganic elements may be used in a combination. Among them, the metal oxide is particularly preferably used.

The notation of the average composition of the metal oxides is represented by, for example, MOₓ such as SiOₓ and AlOₓ (in the formula, M represents a metal element, and the range of the value X varies depending on the metal element respectively). In the above, when X = 0, it is metal, and the upper limit of the range of X is the value when the metal is fully oxidized. That is, the range of value X is greater than 0, and the upper limit is, for example, 2 for silicon, 1.5 for aluminum, 1 for magnesium, 2 for titanium, 1 for lead, 2 for zirconium, and 1.5 for yttrium.

Among the above, in the present invention, the inorganic vapor deposition layer preferably includes one type or two types or more of the inorganic compounds including aluminum element and/or silicon element. As specific examples of the inorganic compound including aluminum element, aluminum oxides wherein X is in a range of 1.0 to 2.0 are preferable, and as specific examples of the inorganic compound including silicon element, silicon oxides wherein X is in a range of 0.5 to 1.5 are preferable.

For the inorganic vapor deposition layer, one type of these inorganic compounds may be used, or a combination of two types or more of these inorganic compounds may be used. The inorganic vapor deposition layer may be a single layer, and may be two layers or more. When the inorganic vapor deposition layer is a single layer, it may be formed from one type of the inorganic compound, and may be formed from a mixture of two types or more of the inorganic compounds. When the inorganic vapor deposition layer includes two layers, layers having the same or different compositions may be stacked, and each layer may be formed from one type or two types or more of the inorganic compounds.

In the present disclosure, inorganic materials are preferably used for the inhibiting layer from the viewpoint of thinning the film thickness. By reducing the film thickness of the inhibiting layer, the film thickness of the entire volume hologram laminate may be easily flattened. Also, the thickness as the volume hologram laminate may be reduced when the film thickness of the inhibiting layer is thin, and when the volume hologram laminate in the present disclosure is used for a card, a hologram sheet to be embedded, a volume hologram transfer foil, for example, the surface of the final product may be flattened.

The thickness of the inhibiting layer is not particularly limited, and is preferably 0.01 um or more and 2.0 um or less, and particularly preferably 0.05 um or more and 1.0 um or less. When the thickness is too thin, it is difficult to obtain the effect of inhibiting the migration of the low molecular material such as uncured photopolymerizable compound, from the volume hologram layer into the resin layer, during the production of the volume hologram laminate. When the thickness is too thick, the traces of the coating may be clearly seen, so that the design is inferior.

The method for forming an inhibiting layer is not particularly limited as long as it is a method capable of forming thereof in a pattern form on the resin layer, and for example, gravure printing, and screen printing are preferable.

In the present disclosure, since the inhibiting layer-formed region and the inhibiting layer non-formed region are defined by the inhibiting layer, the difference in the color of the reproduction image between these regions may be made clear. Also, in the present disclosure, since it is possible to define and design the inhibiting layer-formed region and the inhibiting layer non-formed region by the inhibiting layer, the variation and freedom of the pattern of regions with different colors may be increased.

### 2. Resin layer

The resin layer in the present disclosure includes transparent resin, and is placed so as to be in contact with the volume hologram layer and the inhibiting layer in a pattern form.

### (a) Material of resin layer

### (i) Transparent resin

The transparent resin used in the present disclosure is not particularly limited as long as it is transparent. Specific examples of the transparent resin may include plastic resins such as various synthetic resins such as acrylic based resins, styrene based resins, polyester based resins, urethane based resins, polyvinyl acetate resins, polyvinyl chloride resins, alkyd based resins, petroleum based resins, ketone resins, epoxy based resins, melamine based resins, fluorine based resins, silicone based resins, cellulose derivatives, and rubber based resins, or mixtures or copolymers of two types or more of them; thermosetting resins such as melamine based resins, phenolic based resins, urea based resins, epoxy based resins, unsaturated polyester based resins, diallyl phthalate based resins, urethane based resins, and amino alkyd based resins; curable resins such as ionizing radiation curable resins cured by an irradiation with ultraviolet rays or electron beams such as acrylate based resins, urethane acrylate based resins, ester acrylate based resins, and epoxy acrylate based resins. One type of the transparent resin may be used alone, and two types or more may be used in a combination.

Among the above, the thermoplastic resin is preferable. By including the thermoplastic resin, the low molecular material such as uncured photopolymerizable compound included in the volume hologram layer, particularly cation polymerizable compound, is easily drawn during the production of the volume hologram laminate. Specific examples of the preferable resin may include acrylic based resins, polyvinylacetate resins, and polyvinyl chloride resins.

### (ii) Low molecular material

The resin layer in the present disclosure usually includes the low molecular material same as the low molecular material used in the volume hologram layer, or the polymer of the low molecular material. As described above, in the production process of a volume hologram laminate, after recording the interference fringe on the volume hologram layer, the reproduction wavelength of the volume hologram layer in the inhibiting layer-non-formed region may be shifted to the shorter wavelength side with respect to the recording wavelength by migrating the low molecular material, such as the uncured photopolymerizable compound, included in the volume hologram layer in the inhibiting layer-non-formed region into the resin layer, when the volume hologram layer and the resin layer are heated in contact with each other. Also, in the production process of a volume hologram laminate, after heating the volume hologram layer and the resin layer in contact with each other, the uncured photopolymerizable compound included in the volume hologram layer and resin layer are polymerized. Therefore, the resin layer includes the low molecular material same as the low molecular material used in the volume hologram layer, or the polymer of the low molecular material.

Examples of the low molecular material may include photopolymerizable compound included in the volume hologram layer. Further, examples of the low molecular material may also include the photopolymerization initiators included in the volume hologram layer. That is, the resin layer preferably includes the photopolymerizable compound same as the photopolymerizable compound included in the volume hologram layer, or the polymer of the photopolymerizable compound. Also, the resin layer may include the photopolymerizable compound and photopolymerization initiator same as the respective photopolymerizable compound and photopolymerization initiator included in the volume hologram layer, or the photopolymerization initiator and the polymer of the photopolymerizable compound.

Since the photopolymerizable compound and the photopolymerization initiator are described in the section of the volume hologram layer later, descriptions herein are omitted.

### (iii) Optional compound

In addition to the transparent resin and low molecular material described above, the resin layer in the present disclosure may include optional compounds. The optional compound is not particularly limited, and a compound capable of imparting the desired function to the resin layer may be selected and used as appropriate according to the use application of the volume hologram laminate in the present disclosure. Examples of the optional compound may include antioxidants, ultraviolet absorbers, light stabilizers, heat stabilizers, plasticizers, lubricants, antistatic agents, flame retardants, and fillers. One type of these may be used alone, and two types or more may be used in combination.

Examples of the antioxidant may include phenol based, sulfur based, and phosphorus based. Examples of the ultraviolet absorber may include benzophenone based, benzotriazole based, salicylate based, cyanoacrylate based, formamidine based, and oxanilide based. Examples of the light stabilizer may include hindered amine based, and nickel complex based. Examples of the heat stabilizer may include hindered phenol based, sulfur based, and hydrazine based. The plasticizer is appropriately selected according to the types of the transparent resin described above, and examples thereof may include phthalate ester based, phosphate ester based, fatty acid ester based, aliphatic dibasic acid ester based, oxybenzoate ester based, epoxy based, and polyester based. Examples of the lubricant may include fatty acid ester based, fatty acid based, metal soap based, fatty acid amide based, higher alcohol based, and paraffin based. Examples of the antistatic agent may include cation based, anion based, nonion based and amphoteric ion based. Examples of the flame retardant may include bromine based, phosphorus based, chlorine based, nitrogen based, aluminum based, antimony based, magnesium based, boron based, and zirconium based. Examples of the filler may include calcium carbonate, talc, agalmatolite, and kaolin.

### (b) Other points about resin layer

The thickness of the resin layer is not particularly limited as long as it is capable of shifting the reproduction wavelength of the volume hologram layer in the inhibiting layer-non-formed region to the shorter wavelength side with respect to the recording wavelength, and it is appropriately adjusted according to, for example, the type of the transparent resin.

As described above, by adjusting the thickness of the resin layer, the shift amount of the reproduction wavelength of the volume hologram layer may be adjusted. For this reason, the thickness of the resin layer is preferably adjusted so that the color of the reproduction image from the volume hologram layer in the inhibiting layer-non-formed region may be a desired color.

Specifically, the thickness of the resin layer is preferably 0.5 um or more and 10 um or less, more preferably 9 um or less, and particularly preferably 1.0 um or more and 5.0 um or less. When the thickness of the resin layer is in the above range, the colors of the reproduction image from the volume hologram layer are sufficiently different between the inhibiting layer-formed region and the inhibiting layer-non-formed region, and the shift amount of reproduction wavelength in the inhibiting layer-non-formed region is not too large so that there is no risk that the color of the reproduction image is not observed.

Also, the resin layer in the present disclosure is preferably formed over the entire surface of the substrate. Also, the resin layer is preferably formed in a constant film thickness.

Here, the constant film thickness means that the average thickness is calculated by measuring the thickness at five locations, and the maximum value and minimum value of the measurement values of the five points are within ± 10% of the average value.

To measure the film thickness of the resin layer present in the volume hologram laminate, a measurement sample is prepared by cutting a volume hologram laminate in vertical direction, and the thickness is measured from the photograph of the cross-sectional surface of the measurement sample obtained using a scanning electron microscope (SEM).

Also, in the production of a volume hologram laminate in the present disclosure, since the resin layer is placed so as to be in contact with the volume hologram layer after the interference fringe is recorded on the volume hologram layer, no interference fringe is recorded on the resin layer.

Here, the absence of interference fringe recorded on the resin layer may be confirmed by observing the section of the resin layer cut in the thickness direction with a transmission electron microscope (TEM) or a scanning electron microscope (SEM).

### 3. Volume hologram layer

The volume hologram layer in the present disclosure includes a polymer of a photopolymerizable compound; an interference fringe is recorded thereon; and is placed in contact with the resin layer and the inhibiting layer.

An interference fringe is recorded on the volume hologram layer, light is diffracted by the interference fringe, and an image is reproduced. In the present disclosure, the volume hologram layer is usually a reflective type volume hologram layer, so-called a Lipman hologram. The reflective type volume hologram layer is a volume hologram layer capable of reproducing an image by irradiating reproduction illuminating light from the observer side surface of the volume hologram layer. The image reproduced by the interference fringe recorded on the volume hologram layer may be appropriately designed.

### (a) Material of volume hologram layer

### (i) Polymer of photopolymerizable compound

The photopolymerizable compound used in the present disclosure is not particularly limited as long as the polymerization reaction may be proceeded by irradiating a predetermined light, and the interference fringe may be recorded on the volume hologram layer; generally, at least one of the radical polymerizable compound or cation polymerizable compound is used. Also, the radical polymerizable compound and cation polymerizable compound may be used together.

Further, when the radical polymerizable compound is used as the photopolymerizable compound, a photoradical polymerization initiator is also used to initiate the polymerization reaction of the radical polymerizable compound. Meanwhile, when the cation polymerizable compound is used as the photopolymerizable compound, a photocation polymerization initiator is also used for the same reason. Therefore, when the radical polymerizable compound and the cation polymerizable compound are used as the photopolymerizable compound, the photoradical polymerization initiator and the photocation polymerization initiator are used.

Incidentally, since the interference fringe has already been recorded, the volume hologram layer includes the polymer of the photopolymerizable compound.

The radical polymerizable compound, cation polymerizable compound, photoradical polymerization initiator, and photocation polymerization initiator used in the present disclosure are hereinafter described in order.

### (i-1) Cation polymerizable compound

The cation polymerizable compound used in the present disclosure is a compound that is cation polymerized by Broensted acid or Lewis acid generated by the decomposition of the photocation polymerization initiator described below due to energy ray irradiation.

Here, the formation of the volume hologram layer is carried out by, for example, recording the interference fringe by polymerizing the radical polymerizable compound described later by irradiating laser light, and then, polymerizing the uncured material such as cation polymerizable compound by irradiating the entire surface with energy rays. In this case, lights with different wavelengths are usually used for, for example, the laser light for recording the interference fringe and the energy rays irradiated over the entire surface. Therefore, the cation polymerizable compound is preferably a compound that is not polymerized by the wavelength of the light source used for recording the interference fringe.

Also, cation polymerizable compound is preferably liquid at ordinary temperature, since the polymerization of the radical polymerizable compound is preferably carried out in a composition with relatively low viscosity. Incidentally, the ordinary temperature is 20 ± 15°C.

Examples of such cation polymerizable compound may include compounds described in, for example, "Chemtec. Oct." J. V. Crivello, pp.624 (1980); Japanese Patent Application Laid-Open (JP-A) No. S62-149784; Journal of The Adhesion Society of Japan [Vol. 26, No. 5, pp. 179-187 (1990)].

Specific examples may include diglycerol polyglycidyl ether, pentaerythritol polyglycidyl ether, 1,4-bis(2,3-epoxypropoxy perfluoroisopropyl) cyclohexane, sorbitol polyglycidyl ether, trimethylol propane polyglycidyl ether, resorcine diglycidyl ether, 1,6-hexanediol diglycidyl ether, polyethylene glycol diglycidyl ether, phenylglycidyl ether, paratertiary butyl phenylglycidyl ether, diglycidyl adipate ester, diglycidyl orthophthalate ester, dibromophenylglycidyl ether, dibromoneopentylglycol diglycidyl ether, 1,2,7,8-diepoxyoctane, 1,6-dimethylol perfluorohexane diglycidyl ether, 4,4'-bis(2,3-epoxypropoxy perfluoroisopropyl)diphenyl ether, 3,4-epoxy cyclohexylmethyl-3',4'-epoxycyclohexanecarboxylate), 3,4-epoxy cyclohexyloxirane, 1,2,5,6-diepoxy-4,7-methanoperhydroindene, 2-(3,4-epoxycyclohexyl)-3',4'-epoxy-1,3-dioxane-5-spirocyclohexane, 1,2-ethylenedioxy-bis(3,4-epoxycyclohexylmethane), 4',5'-epoxy-2'-methylcyclohexylmethyl-4,5-epoxy-2-methylcyclohexanecarboxylate, ethyleneglycol-bis(3,4-epoxycyclohexanecarboxylate), bis-(3,4-epoxycyclohexylmethyl)adipate, di-2,3-epoxycyclopentylether, vinyl-2-chloroethylether, vinyl-n-butylether, triethyleneglycoldivinylether, 1,4-cyclohexanedimethanoldivinylether, trimethylolethanetrivinylether, vinylglycidylether and the compounds represented by the following formula.

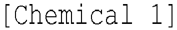

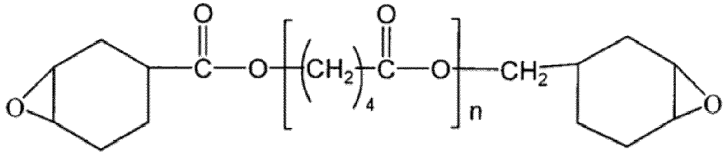

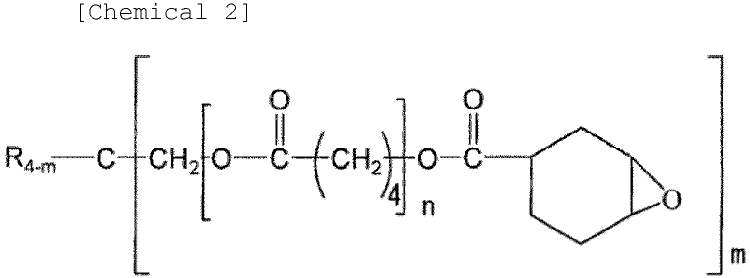

Incidentally, in the above formula, "n" represents an integer of 1 or more and 5 or less. Also, "m" is either 3 or 4, and R represents an ethyl group or a hydroxymethyl group.

One type of the cation polymerizable compound may be used alone, and two types or more may be used in combination.

### (i-2) Radical polymerizable compound

The radical polymerizable compound used in the present disclosure is not particularly limited as long as it is a compound polymerized by the action of active radical generated from the photoradical polymerization initiator described later by, for example, laser irradiation when forming the volume hologram layer; and it preferably includes at least one ethylenically unsaturated double bond in the molecule.

Here, the volume hologram layer is for recording the interference fringe by polymerizing radical polymerizable compound, for example, by laser light or light with excellent coherence. Therefore, the radical polymerizable compound and cation polymerizable compound having different refractive indexes from each other are usually selected and used. Although the magnitude relationship between the refractive indexes of the radical polymerizable compound and cation polymerizable compound is not particularly limited, from the viewpoint of material selectivity, it is preferable that the average refractive index of the radical polymerizable compound is higher than the average refractive index of the cation polymerizable compound, and specifically, the average refractive index is preferably 0.02 or more higher. When the difference in the average refractive index between the radical polymerizable compound and the cation polymerizable compound is too small, the refractive index modulation may be insufficient and it may be difficult to obtain a high-definition image.

Incidentally, the average refractive index is the average value of the refractive index measured for the polymer after the cation polymerizable compound or the radical polymerizable compound is polymerized. Also, the refractive index refers to the value measured by the Abbe refractometer.

Examples of the radical polymerizable compound may include methyl methacrylate, hydroxyethyl methacrylate, lauryl acrylate, N-acryloylmorpholine, 2-ethylhexylcarbitol acrylate, isobornyl acrylate, methoxypropylene glycol acrylate, ethylene glycol diacrylate, triethylene glycol diacrylate, 1,3-butanediol diacrylate, 1,4-cyclohexanediol diacrylate, 1,6-hexanediol diacrylate, tetraethylene glycol diacrylate, polyethylene glycol diacrylate, propylene glycol diacrylate, neopentyl glycol diacrylate, trimethylolethane triacrylate, trimethylolpropane triacrylate, trimethylolpropane tri(acryloyloxypropyl)ether, pentaerythritol diacrylate, pentaerythritol triacrylate, pentaerythritol tetraacrylate, dipentaerythritol diacrylate, dipentaerythritol triacrylate, dipentaerythritol tetraacrylate, dipentaerythritol hexaacrylate, sorbitol triacrylate, sorbitol tetraacrylate, sorbitol pentaacrylate, sorbitol hexaacrylate, tri(acryloyloxyethyl)isocyanurate, polyester acrylate oligomer, acrylamide, methacrylamide, methylene bisacrylamide, styrene, 2-bromostyrene, 2-phenoxyethylacrylate, phenol ethoxylate monoacrylate, 2-(p-chlorophenoxy)ethylacrylate, P-chlorophenylacrylate, phenyl acrylate, 2-phenylethylacrylate, 2,3-naphthalenedicarboxylic acid(acryloxyethyl) monoester, methylphenoxyethyl acrylate, nonylphenoxyethyl acrylate, β-acryloxyethyl hydrogen phthalate, phenoxy polyethylene glycol acrylate, benzyl acrylate, 2,4,6-tribromophenyl acrylate, 2,3-dibrompropyl acrylate, 2-hydroxy-3-phenoxypropyl acrylate, 2-naphthyl acrylate, 2-(1-naphthyloxy)ethyl acrylate, o-biphenyl acrylate, dicyclopentenyl acrylate, dibromneopentylglycol diacrylate, 1,3-bis[2-acryloxy-3-(2,4,6-tribromophenoxy)propoxy]benzene, N-vinylcarbazole, 2-(9-carbazolyl)ethyl acrylate, diphenic acid(2-methacryloxyethyl) monoester, diphenic acid(2-acryloxyethyl)(3-acryloxypropyl-2-hydroxy) diester, 2,3-naphthalene dicarboxylic acid(2-acryloxyethyl)(3-acryloxypropyl-2-hydroxy) diester, 4,5-phenanthrenedicarboxylic acid (2-acryloxyethyl)(3-acryloxypropyl-2-hydroxy) diester, bis(4-acryloxydiethoxyphenyl) methane, bis(4-acryloxyethoxy-3,5-dibromophenyl) methane, 2,2-bis(4-acryloxyethoxyphenyl)propane, 2,2-bis(4-acryloxydiethoxyphenyl)propane, 2,2-bis(4-acryloxyethoxy-3,5-dibromophenyl)propane, 9,9-bis(4-acryloxydiethoxyphenyl)fluorene, 9,9-bis(4-acryloxytriethoxyphenyl)fluorene, 9,9-bis(4-acryloxydipropoxyphenyl)fluorene, 9,9-bis(4-acryloxyethoxy-3-methylphenyl)fluorene, 9,9-bis(4-acryloxyethoxy-3-ethylphenyl)fluorene, 9,9-bis(4-acryloxyethoxy-3,5-dimethyl)fluorene, diethylenedithioglycol acrylate, triphenylmethyl thioacrylate, 2-(tricyclo(5,2,102,6)dibromodecylthio) ethylacrylate, S-(1-naphthylmethyl) thioacrylate, bis(4-acryloxyethoxyphenyl)sulfone, bis(4-acryloxydiethoxyphenyl)sulfone, bis(4-acryloxypropoxyphenyl) sulfone, bis(4-acryloxyethoxy-3,5-dibromophenyl) sulfone, and compounds wherein "acrylate" described above is replaced with "methacrylate" or "acryloxy" described above is replaced with "methacryloxy". Further, sulfur-containing acrylic compounds disclosed in Japanese Patent Application Laid-Open (JP-A) No. S61-72748 may be used, and examples thereof may include 4,4'-bis(β-acryloyloxyethylthio)diphenyl sulfone, 4,4'-bis(β-acryloyloxyethylthio)diphenyl ketone, 4,4'-bis(β-acryloyloxyethylthio)-3,3',5,5'-tetrabromodiphenylketone, 2,4-bis(β-acryloyloxyethylthio)diphenyl ketone, and compounds wherein "acryloyl" described above is replaced with "methacryloyl"; or ethylenically unsaturated double bond-containing compound including at least two or more S atoms in a molecule, such as those disclosed in JP-A No. H02-247205 or JP-A No. H02-261808. One type of the radical polymerizable compound may be used alone, and two types or more may be used in a combination.

### (i-3) Photoradical polymerization initiator

The photoradical polymerization initiator used in the present disclosure is not particularly limited as long as it is an initiator capable of generating active radicals by irradiated light when forming a volume hologram layer, and polymerizing the radical polymerizable compound described above. Examples of such photoradical polymerization initiator may include initiators disclosed in, for example, U.S. Patent No. 4,766,055, U.S. Patent No. 4,868,092, U.S. Patent No. 4,965,171, JP-A No. S54-151024, JP-A No. S58-15503, JP-A No. S58-29803, JP-A No. S59-189340, JP-A No. S60-76735, JP-A No.H01-28715, JP-A No. H04-239505, and "Proceedings of Conference on Radiation Curing Asia" (P. 461-477, 1988).

### (i-4) Photocation polymerization initiator

The photocation polymerization initiator used in the present disclosure is not particularly limited as long as it is an initiator that generates Broensted acid or Lewis acid by an energy ray irradiation, and polymerizes the cation polymerizable compound described above. In particular, it preferably has low photosensitivity that does not react to laser light or light with excellent coherence that polymerizes the radical polymerizable compound, and is sensitive to the energy rays thereafter irradiated on the entire surface. As the result, when the radical polymerizable compound is polymerized, the cation polymerizable compound is able to remain practically not reacted, and large refractive index modulation in the volume hologram layer may be obtained.

Here, the photocation polymerization initiator having low photosensitivity to laser light or light with excellent coherence refers to those with the maximum DSC value, caused by the photopolymerization initiated by the photocation polymerization initiator, of 500 mW or less (including 0 mW) per 1 mg of the measurement sample when a thermal analysis is carried out under the following conditions.

### <Measurement conditions>

Measuring device: a differential scanning calorimeter DSC220 and light source device UV-1 are used in a thermal analysis system SSC5200H from Seiko Instruments Inc.

Measurement sample: the target photocation polymerization initiator is prepared by dissolving 3% by mass into UVR-6110 (cation polymerizable compound) from Union Carbide Corporation. Incidentally, after dissolving by adding organic solvent, the organic solvent may be evaporated.

Irradiated light: 200 mJ/cm² of the light adjusted to the same degree as laser light or light with excellent coherence, is irradiated using an interference filter (half width of approximately 10 nm).

Examples of such photocation polymerization initiator may include those disclosed in, for example, "UV Curing: Science and Technology", pages 23-76, edited by S. Peter Pappas, A Technology Marketing Publication; and "Coments Inorg. Chem.", B. Klingert, M. Riediker and A. Roloff, Vol. 7, Third Issue, pages 109-138 (1988). One type of the photocation polymerization initiator may be used alone, and two types or more may be used in a combination.

In particular, preferable examples of the diaryliodonium salts may include tetrafluoroborate, hexafluorophosphate, hexafluoroarsenate, hexafluoroantimonate, trifluoromethanesulfonate, and 9,10-dimethoxyanthracenesulfonate of iodonium shown in the photoradical polymerization initiator described above. Preferable examples of the triarylsulfonium salts may include tetrafluoroborate, hexafluorophosphate, hexafluoroarsenate, hexafluoroantimonate, trifluoromethanesulfonate, and 9,10-dimethoxyanthracene-2-sulfonate of sulfonium such as triphenylsulfonium, 4-tertiary butyl triphenylsulfonium, tris(4-methylphenyl)sulfonium, tris(4-methoxyphenyl)sulfonium, 4-thiophenyl triphenylsulfonium.

Incidentally, an initiator having the properties of the photoradical polymerization initiator and the properties of the photocation polymerization initiator may be used as the photoradical polymerization initiator or the photocation polymerization initiator. Examples of such initiator may include aromatic iodonium salts, aromatic sulfonium salts, aromatic diazonium salts, aromatic phosphonium salts, triazine compounds, and iron-arene complexes. Specific examples may include iodonium salts such as chloride, bromide, borofluoride salt, hexafluorophosphate salt, and hexafluoroantimonate salt of iodonium such as diphenyliodonium, ditolyliodonium, bis(p-t-butylphenyl)iodonium, and bis(p-chlorophenyl)iodonium; sulfonium salts such as chloride, bromide, borofluoride salt, hexafluorophosphate salt, and hexafluoroantimonate salt of sulfonium such as triphenylsulfonium, 4-t-butyl triphenylsulfonium, and tris(4-methylphenyl)sulfonium; 2,4,6-substituted-1,3,5-triazine compounds such as 2,4,6-tris(trichloromethyl)-1,3,5-triazine, 2-phenyl-4,6-bis(trichloromethyl)-1,3,5-triazine, and 2-methyl-,4,6-bis(trichloromethyl)-1,3,5-triazine.

### (ii) Optional compound

The volume hologram layer in the present disclosure may include an optional compound other than the polymer of the photopolymerizable compound described above. The optional compound is not particularly limited as long as it is a compound capable of imparting the desired function to the volume hologram layer according to the use application of the volume hologram laminate in the present disclosure. Examples of the optional compound may include sensitizing pigments, fine particles, thermopolymerization inhibitors, silane coupling agents, plasticizers, colorants, and binder resins.

Examples of the binder resin may include polymethacrylate esters or their partial hydrolyzates, polyvinyl acetates or their hydrolyzates, polyvinyl alcohols or their partial acetalides, triacetylcellulose, polyisoprene, polybutadiene, polychloroprene, silicone rubber, polystyrene, polyvinyl butyral, polyvinylchloride, polyacrylate, chlorinated polyethylene, chlorinated polypropylene, poly-N-vinylcarbazole or their derivatives, poly-N-vinylpyrolidone or their derivatives, copolymers of styrene and maleic anhydride or their half esters. Also, copolymers obtained by polymerizing at least one type of monomers selected from the group consisting of copolymerizable monomers such as acrylic acid, acrylic acid ester, methacrylic acid, methacrylic acid ester, acrylic amide, acrylic nitrile, ethylene, propylene, vinyl chloride, and vinyl acetate, may be used. One type of the binder resin may be used alone, and two types or more may be used in a combination.

An oligomer type curable resin may also be used as the binder resin. Examples of such resin may include epoxy compounds produced by the condensation reaction of epichlorohydrin with various phenolic compounds such as bisphenol A bisphenol S, novolac, o-cresol novolac, and p-alkylphenol novolac.

Further, organic-inorganic hybrid polymers using a sol-gel reaction may be used as the binder resin. Examples of such resin may include copolymers of vinyl monomers and organometallic compounds including a polymerizable group represented by the general formula (1) below.

R'mM(OR") n (1)

(Wherein M is metal such as Si, Ti, Zr, Zn, In, Sn, Al, and Se; R' is a 1-10C vinyl group or (meta)acryloyl group; R'' is a 1-10C alkyl group; and m + n is the valence of metal M.)

Examples of organometallic compound when the metal M is Si may include vinyltriethoxysilane, vinyltrimethoxysilane, vinyltributoxysilane, vinyltriallyloxysilane, vinyltetraethoxysilane, vinyltetramethoxysilane, acryloxypropyltrimethoxysilane, and methacryloxypropyltrimethoxysilane.

Also, examples of the vinyl monomer may include acrylic acid, acrylic acid esters, methacrylic acid and methacrylic acid esters.

Here, in the volume hologram layer, the interference fringe is recorded as a refractive index modulation or a transmittance modulation. Therefore, the refractive index difference between the binder resin and the photopolymerizable compound is preferably large. In order to increase the refractive index difference between the binder resin and the photopolymerizable compound, the organometallic compound represented by the general formula (2) below may be added to the volume hologram layer.

M' (OR‴) k (2)

(Wherein M' is metal such as Ti, Zr, Zn, In, Sn, Al, and Se; R‴ represents a 1-10C alkyl group; and "k" is the valence of metal M.)

When the compound represented by the general formula (2) described above is added, since it forms a mesh structure with the binder resin by a sol-gel reaction in the presence of water and an acid catalyst, not only the refractive index of the binder resin is increased, but also the toughness and heat resistance of the layer may be improved. Therefore, in order to increase the refractive index difference with respect to the photopolymerizable compound, the metal M' preferably includes a high refractive index.

The sensitizing pigment is not particularly limited, and is selected in consideration of the laser light wavelength used when the interference fringe is recorded. Examples of sensitizing pigment may include thiopyrylium salt based pigments, merocyanine based pigments, quinoline based pigments, styrylquinoline based pigments, coumarin based pigments, ketocoumarin based pigments, thioxanthene based pigments, xanthene based pigments, oxonol based pigments, cyanine based pigments, rhodamine based pigments, pyrylium based pigments, cyclopentanone based pigments and cyclohexanone based pigments.

Examples of the cyanine based pigment and merocyanine based pigment may include 3,3'-dicarboxyethyl-2,2'-thiocyaninebromide, 1-carboxymethyl-1'-carboxyethyl-2,2'-quinocyanine bromide, 1,3'-diethyl-2,2'-chinothiacyanine iodide, and 3-ethyl-5-[(3-ethyl-2(3H)-benzothiazolylidene)ethylidene]-2-thioxo-4-oxazolidine. Also, examples of the coumarin based pigment and ketocoumarin based pigment may include 3-(2'-benzoimidazole)7-N,N-diethylaminocoumarin, 3,3'-carbonylbis(7-diethylaminocoumarin), 3,3'-carbonylbiscoumarin, 3,3'-carbonylbis(5,7-dimethoxycoumarin), and 3,3'-carbonylbis(7-acetoxycoumarin).

When high transparency like optical elements is required, the visible light active sensitizing pigment is preferably colorless by being decomposed by, for example, a heating or an ultraviolet irradiation in the post treatment step after recording the interference fringe. The cyanine based pigments described above are preferably used as such sensitizing pigment.

### (b) Other points about volume hologram layer

The glass transition temperature of the volume hologram layer is preferably, for example, 80°C or more. Thereby, the volume hologram layer may be stable even when heat is applied thereto, and it is possible to transfer the volume hologram layer by heat transfer method, for example.

Here, the glass transition temperature may be measured using, for example, a differential scanning calorimeter (DSC).

Also, the thickness of the volume hologram layer is not particularly limited as long as it is a thickness to the extent that desired interference fringe may be recorded, and the thickness is preferably, for example, 1 um or more and 50 um or less, more preferably 3 um or more and 40 um or less, and further preferably 5 um or more and 30 um or less.

### II. Substrate

The substrate used in the present disclosure is a member configured to support the volume hologram laminate portion described above.

The substrate is not particularly limited as long as it is able to support the volume hologram laminate portion, and it may be selected and used as appropriate according to the use application of the volume hologram laminate in the present disclosure.

Specific examples the substrate may include transparent resin film such as polyethylene film, polypropylene film, polyethylene fluoride based film, polyvinylidene fluoride film, polyvinyl chloride film, polyvinylidene chloride film, ethylene vinyl alcohol copolymer film, polyvinyl alcohol film, polymethyl methacrylate film, polyethersulfone film, polyetheretherketone film, polyamide film, tetrafluoroethylene-perfluoroalkyl vinyl ether copolymer film, polyester film such as polyethylene terephthalate film, and polyimide film.

Also, the thickness of the substrate is appropriately selected according to the use application or the type of the volume hologram laminate in the present disclosure, and the thickness is, for example, 2 um or more and 200 um or less, preferably 10 um or more and 50 um or less.

In order to improve the close adhesiveness with respect to the resin layer, for example, the substrate may be subjected to a surface treatment. Examples of the surface treatment may include corona treatment, ozone treatment, plasma treatment, ionizing radiation treatment, dichromate treatment, anchor treatment, or primer treatment. Examples of the primer agent may include various primer agents such as urethane based, acrylic based, ethylene-vinyl acetate copolymer based, and vinyl chloride-vinyl acetate copolymer based.

### III. Optional constitution

In addition to the volume hologram laminate portion and substrate described above, the volume hologram laminate in the present disclosure may include an optional constitution as required. The optional constitution is not particularly limited, and a constitution with the desired function may be used as appropriate according to the use application of the volume hologram laminate in the present disclosure. Examples of the optional constitution may include a hard coating layer, an antistatic layer, a printing layer, an ink receptor layer, and a releasing layer.

### IV. Properties of volume hologram laminate

The reproduction wavelength of the volume hologram layer is usually in the visible light range, for example, 380 nm or more and 780 nm or less. In the volume hologram laminate in the present disclosure, an inhibiting layer-formed region including the inhibiting layer and an inhibiting layer-non-formed region including no inhibiting layer differ in a color of a reproduction image. The color of these reproduction images, that is, the color of the reproduction image has only to be a color distinguishable by the human eye, and examples thereof may include purple, bluish-purple, blue, green, yellowish-green, yellow, orange, red and magenta. The colors of the reproduction image are preferably colors with close wavelengths, for example, a combination of green and blue; or a combination of blue and violet or purple.

The color of the reproduction image of the inhibiting layer-formed region including inhibiting layer is preferably a color similar to the color of the recording wavelength.

Also, in the present disclosure, since the reproduction wavelength in the inhibiting layer-non-formed region including no inhibiting layer is shifted to the shorter wavelength side during the production of the volume hologram laminate, the color of a reproduction image in the inhibiting layer-non-formed region including no inhibiting layer is preferably a color with shorter wavelength side than the recording wavelength.

In relation to the color similar to the color of recording wavelength, for example, when the color of the recording wavelength is blue, the similar color is blue; when the color of the recording wavelength is green, the similar color is green; and when the color of the recording wavelength is red, the similar color is red.

The overall thickness of the volume hologram laminate in the present disclosure is preferably 5 um or more and 50 um or less, particularly preferably 10 um or more and 40 um or less. When the thickness is thicker than the above, the surface of the final product, such as a card using the volume hologram laminate in the present disclosure, is likely to be uneven. Incidentally, the overall volume hologram laminate refers to the layer configuration constituted from the volume hologram laminate portion and the substrate, and when the volume hologram laminate includes an adhesive layer, a hard coating layer, an antistatic layer, a printing layer, an ink receptor layer, or a releasing layer, it refers to the layer configuration including these layers.

### V. Method for producing volume hologram laminate

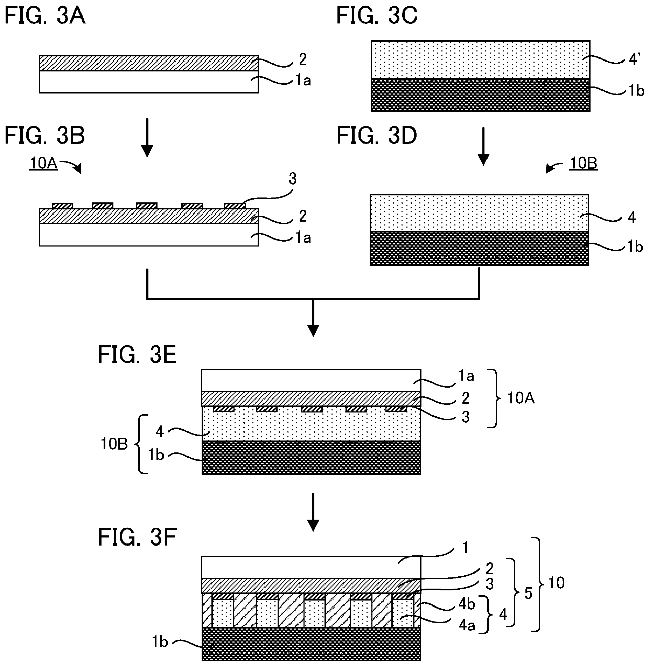

FIGS. 3A to 3F are process drawings illustrating an example of a method for producing a volume hologram laminate in the present disclosure. The method for producing a volume hologram laminate in the present disclosure comprises: a step of producing a resin layer side member 10A by forming a resin layer 2, including transparent resin, on a first substrate 1a, and forming an inhibiting layer 3, in a pattern form, on the resin layer 2 so as to be in contact with the resin layer 2 (FIG. 3A and FIG. 3B); a step of producing a volume hologram layer side member 10B including a volume hologram layer 4 on which an interference fringe is recorded by forming a volume hologram layer 4', including a photopolymerizable compound and a photopolymerization initiator, on a second substrate 1b, and recording an interference fringe on the volume hologram layer 4' (FIG. 3C and FIG. 3D); a stacking step of stacking the resin layer side member 10A and the volume hologram layer side member 10B so that the resin layer 2 and the inhibiting layer 3 in the resin layer side member 10A and the volume hologram layer 4 in the volume hologram layer side member 10B are in contact (FIG. 3E); and a step of heating a stacked body of the resin layer side member 10A and the volume hologram layer side member 10B (FIG. 3F). Also, after the heating step, the method for producing a volume hologram laminate in the present disclosure may further include a post-treatment step of polymerizing the uncured photopolymerizable compound.

### (1) Resin layer side member producing step

The present step is a step of producing a resin layer side member 10A by forming a resin layer 2 on one surface of the first substrate 1a (FIG. 3A), and forming an inhibiting layer 3, in a pattern form, on the resin layer 2 so as to be in contact with the resin layer 2 (FIG. 3B).

The method for forming the resin layer is not limited, and is appropriately selected according to the type of the transparent resin used for the resin layer; and examples thereof may include a method wherein a resin layer is formed by coating one surface of the first substrate 1a with a resin composition including a melt of a transparent resin or a transparent resin and a solvent. By forming the layer by application in this way, it is easy to adjust the film thickness.

Examples of the method for forming an inhibiting layer may include the methods described in "I. Volume hologram laminate, 1. Inhibiting layer" above.

### (2) Volume hologram layer side member producing step

The present step is a step of producing a volume hologram layer side member 10B including a volume hologram layer 4 on which an interference fringe is recorded by forming a volume hologram layer 4', including a photopolymerizable compound and a photopolymerization initiator, on one surface of a second substrate 1b (FIG. 3C), and recording an interference fringe on the volume hologram layer 4' (FIG. 3D).

Examples of the method for forming the volume hologram layer may include a method wherein one surface of the second substrate is coated with a composition for a volume hologram layer including a photopolymerizable compound, a photopolymerizing initiator and a solvent.

In the volume hologram layer, interference fringes produced by light interference are recorded as fringes with different refractive indexes by polymerizing the photopolymerizable compound. The method for recording the interference fringe on a volume hologram layer is not limited, and examples thereof may include a method wherein reference light is injected from the second substrate side, object light is injected from the volume hologram layer side, and these lights are interfered in the volume hologram layer; and a method wherein an original hologram plate is placed on the volume hologram layer side surface, light is injected from the second substrate side, and thereby interfering incident light and reflected light reflected by the original hologram plate in the volume hologram layer. In the method using the original hologram plate, the interference fringe may be easily record.

When a single photopolymerizable compound is used as the photopolymerizable compound included in the volume hologram layer, the interference fringe is recorded by polymerizing this photopolymerizable compound. Meanwhile, when two types or more photopolymerizable compounds are used as the photopolymerizable compounds included in the volume hologram layer, the interference fringe has only to be recorded by polymerizing at least one type of the photopolymerizable compound. Incidentally, when the radical polymerizable compound and cation polymerizable compound described above are used as the photopolymerizable compound, the interference fringe is usually recorded by polymerizing the radical polymerizable compound.

Incidentally, in relation to the resin layer side member producing step and the volume hologram layer side member producing step, either one may be carried out first, and then, the other may be carried out later, and these steps may be carried out parallelly.

### (3) Stacking step

The present step is a step of stacking the resin layer side member 10A, and the volume hologram layer side member 10B so that the resin layer 2 and inhibiting layer 3 of in the resin layer side member 10A and the volume hologram layer 4 in the volume hologram layer side member 10B are in contact (FIG. 3E). By the stacking step, a stacked body including a second substrate 1b, volume hologram layer 4, inhibiting layer 3 in a pattern form, resin layer 2, and first substrate 1a, in this order, is obtained.

In the present disclosure, the volume hologram layer 4 of the volume hologram layer side member 10B in the stacking step is preferably in a semi-cured condition. The reason therefor is to leave the low molecular material such as uncured photopolymerizable compound, to be migrated into the resin layer, in the volume hologram layer 4 in a predetermined amount, in the heating step described later.

In the present disclosure, the volume hologram layer being in a semi-cured condition refers to the state wherein, when recording the interference fringe on the volume hologram layer, although the interference fringe is recorded by polymerizing the radical polymerizable compound, by irradiating laser light, the uncured material such as cationic polymerizable compound is not polymerized by irradiating the entire surface with energy rays.

### (4) Heating step

The low molecular material such as uncured photopolymerizable compound included in the volume hologram layer in the inhibiting layer-non-formed region may be migrated into the resin layer, according to the principle of equilibrium transfer, by heating under the condition wherein the resin layer 2 and inhibiting layer 3 of the resin layer side member 10A are in contact with the volume hologram layer of the volume hologram layer side member 10B (FIG. 3F). In doing so, the migration amount of the low molecular material may be adjusted by controlling the heating temperature or heating time. Meanwhile, in the inhibiting layer-formed region, the migration of the low molecule material into the resin layer is inhibited.

The heating temperature in the present step may be, for example, 60°C or more and 140°C or less, and preferably 80°C or more and 120°C or less. When the heating temperature is too high, it may cause problems such as the color shift is large so that the color of the reproduced image is out of the visible light region; the reproduced image is distorted by the deformation of the hologram laminate; or the hologram laminate is dissolved. Meanwhile, when the heating temperature is too low, the migration rate of the low molecular material into the resin layer is slow so that the heating step is needed to be carried out for a long time. The time for the present step to be carried out may be appropriately set according to the heating temperature, for example.

By peeling the second substrate off after the heating step, a volume hologram laminate including the volume hologram layer, inhibiting layer in a pattern form, resin layer, and substrate, in this order, may be obtained.

### (5) Post-treatment step

In the heating step described above, since the low molecular material such as uncured photopolymerizable compound included in the volume hologram layer is migrated into the resin layer, the uncured photopolymerizable compound is included in the volume hologram layer and the resin layer. Therefore, such the uncured photopolymerizable compound included in the volume hologram layer and resin layer may be fixed by polymerizing thereof in the post-treatment step.

The method for polymerizing uncured photopolymerizable compound is appropriately selected according to the type of photopolymerizable compound, and examples thereof may include a method wherein energy rays are irradiated. Examples of the energy rays may include ultraviolet rays, electron beams, and visible rays.

### B. Volume hologram transfer foil

The volume hologram transfer foil in the present disclosure comprises: the volume hologram laminate described above; and a heat sealing layer placed on a volume hologram layer side surface of the volume hologram laminate.

FIG. 4 is a schematic cross-sectional view illustrating an example of a volume hologram transfer foil in the present disclosure. As shown in FIG. 4, a volume hologram transfer foil 20 comprises: the volume hologram laminate 10 described above; and a heat sealing layer 21 placed on a volume hologram laminate portion 5 side surface of the volume hologram laminate 10.

According to the present disclosure, by used the volume hologram laminate described above, a volume hologram transfer foil having high forgery preventability and excellent designability may be obtained. In the case of the volume hologram transfer foil, when the thickness of the resin layer 2 is more than 9 µm, it may be difficult to sufficiently conduct heat to the heat sealing layer 21 so that the heat sealing layer 21 may not be adhered to the adherend.

Each constitution of the volume hologram transfer foil in the present disclosure is hereinafter described.

### 1. Volume hologram laminate

The volume hologram laminate used in the present disclosure is similar to those described in the section "A. Volume hologram laminate" above.

Although the volume hologram laminate includes at least the substrate and the volume hologram laminate portion as described above, in light of its use application, the volume hologram transfer foil in the present disclosure preferably includes other configurations other than those described above. Preferable examples of the other configurations may include a releasing layer and a protective layer.

### (1) Releasing layer

The releasing layer used in the present disclosure is a member placed between the substrate and the volume hologram laminate portion in the volume hologram laminate.

FIG. 5A is a schematic cross-sectional view illustrating another example of a volume hologram transfer foil in the present disclosure. As shown in FIG. 5A, the volume hologram laminate 10 preferably includes a releasing layer 6 between the substrate 1 and the volume hologram laminate portion 5. Since the adhesive strength between the substrate 1 and the volume hologram laminate portion 5 may be adjusted to an arbitrary range by the releasing layer 6 being included in the volume hologram laminate 10, the releasing ability of the volume hologram laminate portion 5 from the substrate 1, when transferring the volume hologram laminate portion 5 from the volume hologram transfer foil 20 in the present disclosure, may be improved.

Examples of the material used for the releasing layer may include water-soluble resins, hydrophilic resins, waxes, polyethylene wax, silicone wax, silicone resin, fluorine resins, and acrylic resins.

The thickness of the releasing layer may be, for example, approximately 0.5 um or more and 5 um or less.

### (2) Protective layer

FIG. 5B is a schematic cross-sectional view illustrating another example of a volume hologram transfer foil in the present disclosure. As shown in FIG. 5B, the volume hologram laminate 10 may include a protective layer 7 between the releasing layer 6 and the volume hologram laminate portion 5.

The protective layer used in the present disclosure is a member placed between the releasing layer and the volume hologram laminate portion, and when the volume hologram laminate portion is transferred using the volume hologram transfer foil in the present disclosure, it enables to maintain the physical strength, for example, of the transferred volume hologram laminate portion, or it enables the printing such as offset printing on the outermost surface.

Examples of the material used for the protective layer may include one type or a mixture of two types or more selected from a group consisting of acrylic resins, vinyl chloride-vinyl acetate copolymers, polyester resins, polymethacrylic acid ester resins, polyvinyl chloride resins, cellulose resins, silicone resins, rubber chlorides, casein, various surfactants, and metal oxides; ionizing radiation curable resins that responds to ultraviolet rays, electron beams, and so on; thermosetting resins; and thermoplastic resins.

The thickness of the protective layer may be, for example, approximately 0.5 um or more and 5 um or less.

Incidentally, the releasing layer may not be provided when the substrate and the protective layer are releasable from each other; or when a releasing protective layer is formed by combining at least each one type of the material used for the releasing layer and the material used for the protective layer respectively. Also, the releasing layer or the protective layer may not be provided when the rein layer and the substrate in the volume hologram laminate portion are releasable from each other.

### 2. Heat sealing layer

The heat sealing layer used in the present disclosure has a function of adhering the volume hologram laminate portion and the adherend, when transferring the volume hologram laminate portion to the adherend using the volume hologram transfer foil in the present disclosure.

The heat sealing layer includes thermoplastic resin. The thermoplastic resin is appropriately selected according to the type of the transfer object, and is not particularly limited as long as it is capable of adhering the volume hologram laminate portion and the transfer object. Examples of such thermoplastic resin may include maleic acid modified vinyl chloride-vinyl acetate copolymers, ethylene-vinyl acetate copolymers, vinyl chloride-vinyl acetate copolymers, polyamide resins, polyester resins, polyethylene resins, ethylene-isobutyl acrylate copolymers, butyral resins, polyvinyl acetate and copolymers thereof, ionomer resins, acid-modified polyolefin based resins, (meth)acrylic based resins such as acrylic based and methacrylic based, acrylic acid ester based resins, ethylene-(meth)acrylic acid copolymers, ethylene-(meth)acrylic acid ester copolymers, polymethylmethacrylate based resins, cellulose based resins, polyvinyl ether based resins, polyurethane resins, polycarbonate resins, polypropylene resins, epoxy resins, phenolic resins, vinyl based resins, maleic acid resins, alkyd resins, polyethylene oxide resins, urea resins, melamine resins, melamine-alkyd resins, silicone resins, rubber based resins, styrene butadiene styrene block copolymers (SBS), styrene isoprene styrene block copolymers (SIS), styrene ethylene butylene styrene block copolymers (SEBS), and styrene ethylene propylene styrene block copolymer (SEPS). One type of the thermoplastic resin may be used alone, and two types or more may be used in a combination.

The heat sealing layer may include additives. Examples of the additives may include dispersants, fillers, plasticizers, and antistatic agents.

The thickness of the heat sealing layer is not particularly limited, and is appropriately selected according to the type of the transfer object; the thickness is preferably, for example, 0.3 um or more and 50 um or less, and more preferably 0.5 um or more and 25 um or less. When the thickness is too thin, the adhesiveness to the transfer object may be insufficient. Also, when the thickness is too thick, when transferring the volume hologram laminate portion from the volume hologram transfer foil in the present disclosure, the temperature at which the heat sealing layer is heated is too high so that the substrate, for example, may be damaged.

The heat sealing layer may be a single layer, and may be a multilayer. When the heat sealing layer is a multilayer, layers having the same composition may be stacked, and layers having different compositions may be stacked.

### 3. Arbitrary constitution

In addition to the volume hologram laminate and heat sealing layer described above, the volume hologram transfer foil in the present disclosure may include an arbitrary constitution as required. As the arbitrary constitution, a constitution with the desired function may be selected and used as appropriate according to the use application of the volume hologram transfer foil in the present disclosure. Examples of a preferable arbitrary constitution may include primer layers, separators, and printing layers.

The primer layer is placed between the volume hologram laminate and the heat sealing layer, and is provided in order to improve the close adhesiveness between the volume hologram layer and the heat sealing layer. Examples of the primer agent to be used for the primer layer may include various primer agents such as urethane based, acrylic based, ethylene-vinyl acetate copolymer based, and vinyl chloride-vinyl acetate copolymer based.

The separator is placed on the surface of the heat sealing layer, on opposite side to the volume hologram laminate; it is a member configured to suppress the inadvertent adhesion of the heat sealing layer to other substance, or the occurrence of blocking when the volume hologram transfer foil in the present disclosure is wound up; and the separator is temporarily adhered to the heat sealing layer until the volume hologram transfer foil is used. As such separator, commonly used ones may be applied, and examples thereof may include fine paper, linter paper, parchment paper, glassine paper, kraft paper, polyester based resins, and olefin based resins. Also, ones wherein the surface of these members is processed, may be used as the separator, and examples thereof may include ones wherein one surface or both surfaces of these members are coated with, for example, calcium carbonate, talc, silicone resins or melamine resins.

The thickness of the separator may be similar to the thickness of general separators, and is preferably, for example, 12 um or more and 75 um or less.

The printing layer is a member configured to indicate, for example, letters, numbers, symbols, figures, pictures, or patterns. The printing layer may be formed by a general printing method.

### C. Volume hologram label

The volume hologram label in the present disclosure comprises: the volume hologram laminate described above; and an adhesive layer placed on a volume hologram laminate portion side surface of the volume hologram laminate.

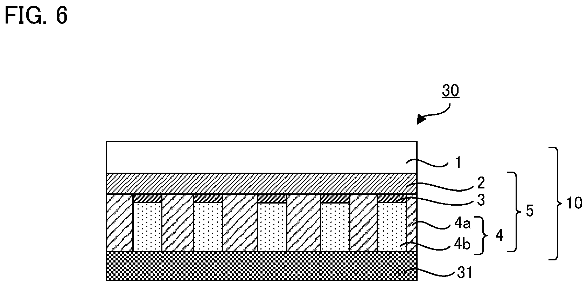

FIG. 6 is a schematic cross-sectional view illustrating an example of a volume hologram label in the present disclosure. As shown in FIG. 6, the volume hologram label 30 comprises: the volume hologram laminate 10; and an adhesive layer 31 placed on a volume hologram laminate portion 5 side surface of the volume hologram laminate 10.

According to the present disclosure, by used the volume hologram laminate described above, a volume hologram label having high forgery preventability and excellent designability may be obtained.

Each constitution of the volume hologram label in the present disclosure is hereinafter described.

### 1. Adhesive layer

The adhesive constituting the adhesive layer used in the present disclosure may be, for example, heat sealants, and may be general pressure-sensitive adhesives.

Since those described in the section "B. Volume hologram transfer foil" above as the thermoplastic resin to be used for the heat sealing layer may be used as the heat sealing agent, the explanations are omitted herein.

Examples of the pressure-sensitive adhesive may include acrylic based tacky agents, rubber based tacky agents, silicone based tacky agents, urethane based tacky agents, or polyester based tacky agents. Among them, it is preferable to use acrylic based tacky agent, which has excellent durability and adhesiveness and is low cost. Also, the pressure-sensitive adhesive constituting the adhesive layer may be a solvent type tacky agent, and may be a solvent-free type tacky agent. A photosensitive tacky agent may be used as the solvent-free tacky agent. The acrylic based tacky agent includes acrylic based tacky resin as a main component, and cross-linking agents, and tackiness imparting agent, for example, are added as necessary. The acrylic based tacky resin mainly includes acrylic based copolymer, obtained by copolymerizing acrylic acid alkyl ester, other monomers, and functional monomers.

The acrylic acid alkyl ester includes a 4-15C alkyl group, and examples of such acrylic acid alkyl ester may include n-butyl acrylate, 2-ethylhexyl acrylate, isooctyl acrylate, and isononyl acrylate. One type of these acrylic acid alkyl esters may be used alone, and two types or more may be mixed.

Examples of the other monomer may include methyl acrylate, methyl methacrylate, styrene, acrylonitrile, and vinyl acetate. One type of these other monomer may be used alone, and two types or more may be used in a combination.

Examples of the functional monomer may include acrylic acid, methacrylic acid, itaconic acid, hydroxylethyl acrylate, hydroxylethyl methacrylate, propylene glycol acrylate, acrylamide, methacrylamide, glycidyl acrylate, glycidyl methacrylate, dimethylaminoethyl methacrylate, and tert-butylaminoethyl methacrylate. One type of these functional monomers may be used alone, and two types or more may be used in a combination.

The constituent ratio (% by mass) of the acrylic acid alkyl esters, other monomers and functional monomers in the acrylic based copolymer is, for example, 70 to 99: 0 to 20: 0.01 to 20, and preferably 80 to 95: 0 to 10: 0.1 to 15. Also, the weight average molecular weight of the acrylic based copolymer is preferably, for example, 200,000 or more 1,200,000 or less, and more preferably 400,000 or more 1,000,000 or less.

The crosslinking agent is an additive to improve the cohesion of the adhesive layer. Examples of such crosslinking agent may include room temperature crosslinking-type crosslinking agents, or heat crosslinking-type crosslinking agents.

The room temperature crosslinking-type crosslinking agent is a crosslinking agent that crosslinks acrylic based tacky agent by aging treatment under room temperature condition. Example of such room temperature crosslinking-type crosslinking agent may include isocyanate based compounds, multifunctional epoxy based compounds, and metal chelating based compounds such as aluminum and titanium. In particular, it is preferable to use isocyanate based compounds or multifunctional epoxy based compounds.

Examples of the isocyanate based compound may include polyisocyanate compounds; trimers of polyisocyanate compounds; urethane prepolymers including a isocyanate group, obtained by reacting polyisocyanate compounds with polyol compounds, at the terminal thereof; or trimers of such urethane prepolymers. Specific examples of the polyisocyanate compound may include 2,4-tolylene diisocyanate, 2,5-tolylene diisocyanate, 1,3-xylylene diisocyanate, 1,4-xylylene diisocyanate, diphenylmethane-4,4'-diisocyanate, 3-methyldiphenylmethane diisocyanate, hexamethylene diisocyanate, isophorone diisocyanate, dicyclohexylmethane-4,4'-diisocyanate, dicyclohexylmethane-2,4'-diisocyanate and lysine isocyanate.

One type of the room temperature crosslinking-type crosslinking agent may be used alone, and two types or more may be mixed and used.

The heat crosslinking-type crosslinking agent is a crosslinking agent that crosslinks acrylic based tacky agents by aging treatment by heating. Examples of such heat crosslinking-type crosslinking agent may include compounds including a methylol group obtained by reacting formaldehyde with melamine, benzoguanamine, or urea, for example; or compounds wherein a part of or all of the methylol group of the compound including a methylol group is etherized with aliphatic alcohol.

For example, the content of the room temperature crosslinking-type crosslinking agent is preferably 0.005 parts by mass or more and 20 parts by mass or less, and more preferably 0.01 parts by mass or more and 10 parts by mass or less, with respect to 100 parts by mass of the acrylic based copolymer. Also, the content of the heat crosslinking-type crosslinking agent is preferably, for example, 0.01 parts by mass or more and 25 parts by mass or less, and more preferably 0.1 parts by mass or more and 20 parts by mass or less, with respect to 100 parts by mass of the acrylic based copolymer.

The tackiness imparting agent is added as needed for the purpose of improving the tackiness performance of the pressure-sensitive adhesive by imparting tackiness strength, tack or viscoelasticity to the pressure-sensitive adhesive, and may not be added if it is not necessary. Examples of the tackiness imparting agent may include rosin based resins, terpene based resins, and xylene based resins. The content of the tackiness imparting agent in the acrylic based tacky agent is, for example, 50% by mass or less, and preferably 40% by mass or less.

Various additives such as antioxidants and ultraviolet absorbers may be added to the pressure-sensitive adhesive to the extent that they do not interfere with their performance. Also, when a photosensitive tacky agent cured by irradiation of ultraviolet rays or visible light is used, a polymerization initiator is added. Examples of the polymerization initiator may include acetophenones, benzophenones, thioxanthones, benzoin, and benzoinmethylethers. Incidentally, when a photosensitive tacky agent cured by irradiation of electron beams is used, a polymerization initiator is not added.

The thickness of the adhesive layer is, for example, 4 um or more and 200 um or less, and preferably 5 um or more and 100 um or less.

### D. Hologram sheet to be embedded

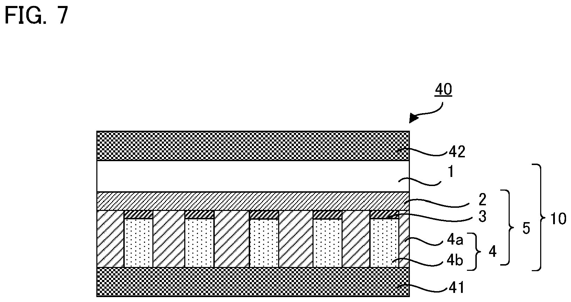

FIG. 7 is a schematic cross-sectional view illustrating an example of a hologram sheet to be embedded in the present disclosure. The hologram sheet to be embedded 40 in the present disclosure comprises: the volume hologram laminate 10 described above; a first heat sealing layer 41 placed on a volume hologram laminate portion 5 side surface of the volume hologram laminate 10; and a second heat sealing layer 42 placed on a substrate 1 side surface of the volume hologram laminate 10.

### 1. Volume hologram laminate

The volume hologram laminate used in the present disclosure is similar to those described in the section "A. Volume hologram laminate" above.

### 2. First heat sealing layer and second heat sealing layer

Since those described in the section "B. Volume hologram transfer foil, 2. Heat sealing layer" above may be used as the first heat sealing layer and the second heat sealing layer, the explanations are omitted herein.

### 3. Arbitrary constitution

In addition to the volume hologram laminate and heat sealing layer described above, the hologram sheet to be embedded in the present disclosure may include an arbitrary constitution as required. As the arbitrary constitution, a constitution with the desired function may be selected and used as appropriate according to the use application of the hologram sheet to be embedded in the present disclosure. Examples of a preferable arbitrary constitution may include separators, and printing layers.

### E. Card

A card in the present disclosure comprises a core sheet; an adhesive layer; the volume hologram laminate described above; and a transparent sheet, in this order.

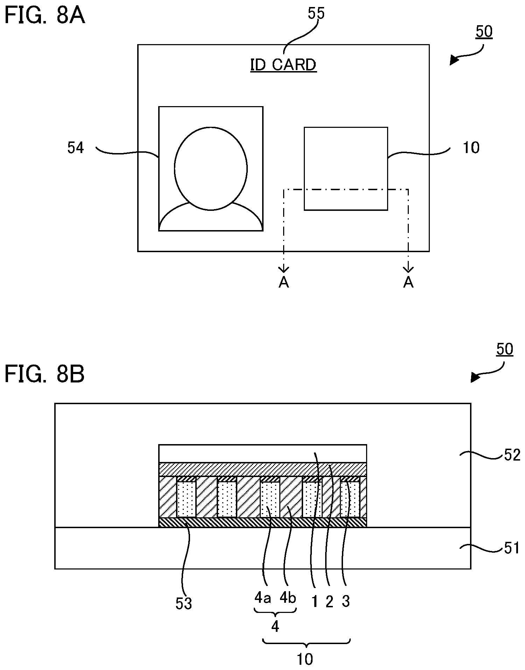

FIGS. 8A and 8B are a schematic plan view and a schematic cross-sectional view illustrating an example of a card in the present disclosure, and FIG. 8B is an A-A cross-sectional view of FIG. 8A. As shown in FIGS. 8A and 8B, a card 50 comprises a core sheet 51; an adhesive layer 53; the volume hologram laminate 10; and a transparent sheet 52, in this order. In addition to the volume hologram laminate 10, the card 50 may also include information such as a photo image 54 or a character 55, for example.

According to the present disclosure, by used the volume hologram laminate described above, a card having high forgery preventability and excellent designability may be obtained.

Each constitution of the card in the present disclosure is hereinafter described.

### 1. Volume hologram laminate

The volume hologram laminate used in the present disclosure is similar to those described in the section "A. Volume hologram laminate" above.

The volume hologram laminate is placed so that the volume hologram laminate portion side surface faces the core sheet.

### 2. Core sheet

The core sheet in the present disclosure is a member that is a basis of the card. Examples of the core sheet may include resin sheets such as polyethylene terephthalate (PET), amorphous polyethylene terephthalate (PET-G), polyvinyl chloride (PVC), and polycarbonate (PC). The outer shape of the core sheet is the same as the outer shape of the card. The core sheet may be transparent, and may be opaque. The color of the core sheet is not particularly limited, and may be in any color. The core sheet may be constituted from, for example, a resin sheet, and may be a resin sheet including a colored layer placed on one surface of the resin sheet.

### 3. Transparent sheet

The transparent sheet in the present disclosure is a member configured to protect the volume hologram laminate. Also, when the transparent sheet is placed on the outermost surface of the card, it may function as an over sheet configured to protect the surface of the card.

The transparent sheet has only to be a sheet having transparency, and examples thereof may include resin sheets such as polyethylene terephthalate (PET), amorphous polyethylene terephthalate (PET-G), polyvinyl chloride (PVC), and polycarbonate (PC). The surface of the transparent sheet may be, for example, a mirror-like surface, and may be a matte surface. The outer shape of the transparent sheet is the same as the outer shape of the card.

### 4. Adhesive layer

The adhesive layer in the present disclosure is a member configured to adhere the volume hologram laminate and the core sheet. Examples of an adhesive constituting the adhesive layer may include a heat sealing agent. Since those described in the section "B. Volume hologram transfer foil" above as the thermoplastic resin to be used for the heat sealing layer may be used as the heat sealing agent, the explanations are omitted herein.

### 5. Arbitrary constitution

In addition to the core sheet, adhesive layer, volume hologram laminate and transparent sheet, the card in the present disclosure may include an arbitrary constitution as required. As the arbitrary constitution, a constitution with the desired function may be selected and used as appropriate according to the use application of the card in the present disclosure. Examples of the arbitrary constitution may include a second adhesive layer, a printing layer, an intermediate sheet, an over sheet, an interlayer adhesive layer, an IC module including an IC chip, an inlet including an IC chip and an antenna, and a magnetic stripe.

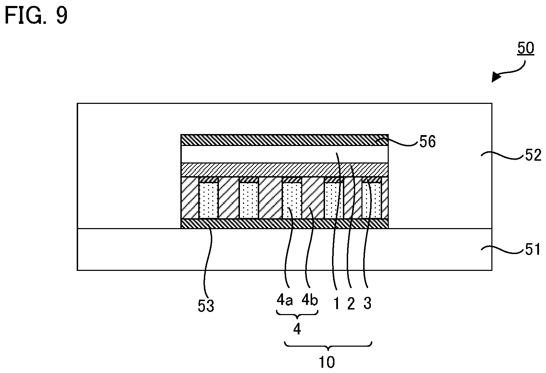

For example, as shown in FIG. 9, the card in the present disclosure may include a second adhesive layer 56 between the volume hologram laminate 10 and the transparent sheet 52. The second adhesive layer is a member configured to adhere the volume hologram laminate and the transparent sheet. Examples of an adhesive constituting the second adhesive layer may include a heat sealing agent. Since those described in the section "B. Volume hologram transfer foil" above as the thermoplastic resin to be used for the heat sealing layer may be used as the heat sealing agent, the explanations are omitted herein.

The card in the present disclosure may include a printing layer at least at any one of on the transparent sheet, on the surface opposite side to the core sheet; and between the core sheet and the volume hologram laminate. Also, the card in the present disclosure may further include a printing layer on the surface of the core sheet, on a surface opposite side to the transparent sheet. The printing layer is a member configured to indicate, for example, letters, numbers, symbols, figures, pictures, or patterns. The printing layer may be, for example, a laser printing layer. Also, when the printing layer is placed at least at any one of on the transparent sheet, on the surface opposite side to the core sheet; and between the core sheet and the volume hologram laminate, this printing layer and the volume hologram layer of the volume hologram laminate may be placed, in a plan view, so as to be overlapping with each other, and may be placed so as not to be overlapping with each other. Also, when the printing layer is placed on the transparent sheet, on the surface opposite side to the core sheet, this printing layer may include, for example, an opening portion so as to be overlapping with the volume hologram laminate in a plan view. The volume hologram laminate may be checked through the opening portion.

### 6. Method for producing card

When the adhesive layer includes the heat sealing agent, examples of the method for producing a card may include a method wherein an adhesive layer is placed on volume hologram laminate portion side surface of the volume hologram laminate; a volume hologram laminate with an adhesive layer is placed on one surface of a core sheet so that an adhesive layer side surface faces the core sheet; a transparent sheet is placed so as to cover the volume hologram laminate with an adhesive layer; and then, a heat compression bonding is carried out from an upper side of the transparent sheet. Thereby, the adhesive layer is heat melted and the volume hologram laminate is adhered to the core sheet. Also, when an adhesive layer is placed on the volume hologram laminate portion side surface of the volume hologram laminate, and a second adhesive layer is placed on the substrate side surface of the volume hologram laminate, the volume hologram laminate may be adhered to the core sheet and the transparent sheet by thermally melting the adhesive layer and the second adhesive layer during the heat compression bonding.

Also, in the production of a card, for example, when the core sheet has a recess, a volume hologram laminate with an adhesive layer may be placed on the recess of the core sheet.

### 7. Use application of card

The card in the present disclosure is, for example, an information recording medium wherein various types of information, such as personal information and confidential information, are recorded. The card may be applied for, for example, various IC cards, ID card such as driver's licenses, insurance cards, employee ID card, membership card, and student card, credit card, debit card, cash cards, card keys, point cards, and prepaid cards.

### F. Hologram-adhered article

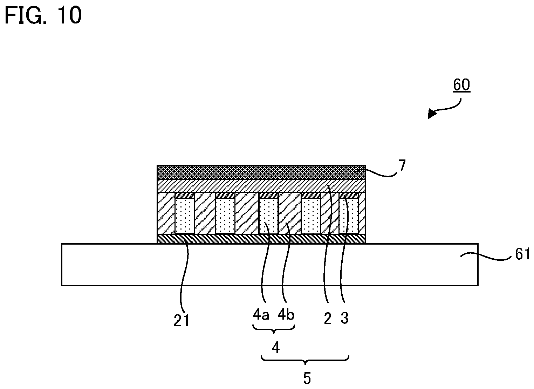

The hologram-adhered article in the present disclosure is hereinafter explained, referring to drawings. FIG. 10 is a schematic cross-sectional view illustrating an example of a hologram-adhered article in the present disclosure. As shown in FIG. 10, the hologram-adhered article 60 in the present disclosure comprises an adherend 61, and a volume hologram laminate portion 5 placed on one surface of the adherend 61 via a heat sealing layer 61. The volume hologram laminate portion 5 in the hologram-adhered article in the present disclosure includes, in this order from the surface opposite side to the adherend 61 side, a resin layer 2 including transparent resin; an inhibiting layer 3 placed in a pattern form, in contact with the resin layer 2; and a volume hologram layer 4, on which an interference fringe is recorded, placed in contact with the resin layer and the inhibiting layer 3 in a pattern form. Further, an inhibiting layer-formed region including the inhibiting layer 3 and an inhibiting layer-non-formed region including no inhibiting layer 3 differ in a color of a reproduction image from the volume hologram layer 4.

The hologram-adhered article in the present disclosure is produced by, for example, transferring the "B. Volume hologram transfer foil" described above to the adherend and peeling the substrate off from the volume hologram transfer foil. According to the present disclosure, by including the volume hologram laminate portion described above, an article having high forgery preventability and excellent designability may be obtained.

Each constitution of the article in the present disclosure is hereinafter described.

### 1. Volume hologram laminate portion

The volume hologram laminate portion used in the present disclosure is similar to those described in the section "A. Volume hologram laminate, I. volume hologram laminate portion" above.

The volume hologram laminate portion is placed so that the volume hologram layer side surface faces the adherend side.

### 2. Heat sealing layer

The heat sealing layer used in the present disclosure is similar to those described in the section "B. Volume hologram transfer foil" above.

### 3. Protective layer

In the present disclosure, as shown in FIG. 10 for example, a protective layer 7 may be included on the volume hologram laminate portion 5, on the surface opposite side to the adherend 61 side. The protective layer is similar to those described in the section "B. Volume hologram transfer foil" above.

### 4. Adherend

Examples of the adherend used in the present disclosure may include transparent one such as glass or plastics, and opaque ones. Examples of the plastics may include vinyl chloride resins, acrylic resins, polystyrene resins, polyester resins such as polyethylene terephthalate, and polycarbonate resins. These resins are suitable for forming cards, sheets or films. For example, the core sheet described above may also be used.

### 5. Method for producing

The hologram-adhered article in the present disclosure may be produced by using the volume hologram transfer foil described above. Specifically, the volume hologram laminate and the adherend are adhered by stacking them so that the surface of the heat sealing layer of the volume hologram transfer foil described above and the surface of the adherend are facing each other, and heating. Then, by peeling and removing the substrate off, a hologram-adhered article is obtained.

Incidentally, the present disclosure is not limited to the embodiments. The embodiments are exemplification, and any other variations are intended to be included in the technical scope of the present disclosure if they have substantially the same constitution as the technical idea described in the claim of the present disclosure and offer similar operation and effect thereto.

### EXAMPLE

Hereinafter, the present disclosure will be described specifically by way of an Example.

### [Example]

Firstly, a resin layer side member and a volume hologram layer side member were prepared separately by independent processes.

### (Preparation of resin layer side member)

Using a 50 um thick polyethylene terephthalate (PET) film (Cosmoshine A4160 from Toyobo, Co. Ltd.) as a first substrate, the first substrate was coated with a resin composition including polyvinyl acetate resin, with a bar coater, so that the thickness thereof was 4 µm, and dried to form a resin layer. An inhibiting layer in a pattern form was formed on the resin layer, by gravure printing, using inhibiting layer material including polyvinyl alcohol. The thickness of the inhibiting layer was 0.5 um. Thus, a resin layer side member was obtained.

### (Preparation of volume hologram layer side member)

Using a 50 um thick polyethylene terephthalate (PET) film (Lumirror T60 from Toray Industries Inc.) as a second substrate, the second substrate was coated with a composition for a volume hologram layer having the following composition, by a gravure coating method at rate of 30 m/minute, dried at 100°C to volatize the solvent, and a layer for forming a volume hologram with a thickness of approximately 10 um was formed. Further, a polyethylene terephthalate (PET) film (SP-PET from Mitsui Chemicals Tohcello Co., Ltd.) with a thickness of 38 µm, whose surface was subjected to a releasing treatment, was laminated on this layer for forming a volume hologram to obtain a stacked film.

### <Composition of composition for volume hologram layer>

- Polymethylmethacrylate: 100 parts by mass
- 9,9-bis(4-acryloxydiethoxyphenyl) fluorene: 5 parts by mass
- 1,6-hexanediol diglycidyl ether: 70 parts by mass
- Diphenyliodonium hexafluoroantimonate: 5 parts by mass
- 3,9-diethyl-3'-carboxymethyl-2,2'-thiocarbocyanine iodonium salt: 1 part by mass
- Methylethylketone 30: parts by mass
- Methanol: 30 parts by mass

Then, hologram was recorded on the layer for forming a volume hologram. Specifically, the releasing PET film was firstly peeled off from the stacked film, the exposed layer for forming volume hologram was laminated onto the original hologram plate, and using laser light with a wavelength of 532 nm, the volume hologram was shot and recorded at an incident angle of 45° and an emission angle of 0°. Then, the volume hologram layer side member was peeled off from the original hologram plate, and the inhibiting layer side surface of the resin layer side member was laminated onto the exposed volume hologram layer surface, and obtained a stacked body including the first substrate, resin layer, inhibiting layer, volume hologram layer, and second substrate in this order.

Then, the stacked body was heated to shift the reproduction wavelength of the volume hologram layer in the inhibiting layer-non-formed region, and then fixed. Specifically, the stacked body was held under atmosphere at 90°C for three minutes, and then fixed by irradiating 2500 mJ/cm² ultraviolet rays with a high-pressure mercury lamp. Thus, a volume hologram laminate was obtained.

The color of the reproduction image of the volume hologram laminate was checked visually, and the color of the reproduction image in the inhibiting layer-formed region in the volume hologram laminate was green, and the color of the reproduction image in the inhibiting layer-non-formed region was blue (FIG. 2).

Incidentally, the present disclosure provides, for example, the following inventions.

[1] A volume hologram laminate comprising a substrate, and a volume hologram laminate portion placed on one surface of the substrate, wherein
   the volume hologram laminate portion includes, from a substrate side,
      a resin layer including transparent resin;
      an inhibiting layer placed in a pattern form, in contact with the resin layer; and
      a volume hologram layer, on which an interference fringe is recorded, placed in contact with the resin layer and the inhibiting layer, in this order, and
   an inhibiting layer-formed region including the inhibiting layer and an inhibiting layer-non-formed region including no inhibiting layer differ in a color of a reproduction image from the volume hologram layer.
[2] The volume hologram laminate according to [1], wherein a reproduction wavelength of the inhibiting layer-non-formed region is shifted to a shorter wavelength side than a reproduction wavelength of the inhibiting layer-formed region.
[3] The volume hologram laminate according to [2], wherein the color of the reproduction image of the inhibiting layer-formed region is green, and the color of the reproduction image of the inhibiting layer-non-formed region is blue.
[4] The volume hologram laminate according to any one of [1] to [3], wherein the interference fringe is not recorded on the resin layer.
[5] The volume hologram laminate according to any one of [1] to [4], wherein the inhibiting layer includes polyvinyl alcohol.
[6] The volume hologram laminate according to any one of [1] to [5], wherein a thickness of the resin layer is 0.5 um or more and 9 um or less.
[7] A method for producing a volume hologram laminate, the method comprising:
   a step of producing a resin layer side member by forming a resin layer, including transparent resin, on a first substrate, and forming an inhibiting layer, in a pattern form, on the resin layer so as to be in contact with the resin layer;
   a step of producing a volume hologram layer side member by forming a volume hologram layer, including a photopolymerizable compound and a photopolymerization initiator, on a second substrate, and recording an interference fringe on the volume hologram layer;
   a step of stacking the resin layer side member and the volume hologram layer side member so that the resin layer and the inhibiting layer in the resin layer side member and the volume hologram layer in the volume hologram layer side member are in contact; and
   a step of heating a stack of the resin layer side member and the volume hologram layer side member.
[8] A volume hologram transfer foil comprising:
   the volume hologram laminate according to any one of [1] to [6]; and
   a heat sealing layer placed on a volume hologram laminate portion side surface of the volume hologram laminate.
[9] A volume hologram label comprising:
   the volume hologram laminate according to any one of [1] to [6]; and
   an adhesive layer placed on a volume hologram laminate portion side surface of the volume hologram laminate.
[10] A volume hologram sheet to be embedded comprising:
   the volume hologram laminate according to any one of [1] to [6];
   a first heat sealing layer placed on a volume hologram laminate portion side surface of the volume hologram laminate; and
   a second heat sealing layer placed on a substrate side surface of the volume hologram laminate.
[11] A card comprising a core sheet; an adhesive layer; the volume hologram laminate according to any one of [1] to [6]; and a transparent sheet, in this order.
[12] The card according to [11] comprising a second adhesive layer between the volume hologram laminate and the transparent sheet.
[13] A hologram-adhered article comprising an adherend, and a volume hologram laminate portion placed on one surface of the adherend via a heat sealing layer, wherein
   the volume hologram laminate portion includes, from a side opposite to an adherend side,
      a resin layer including transparent resin;
      an inhibiting layer placed in a pattern form, in contact with the resin layer; and
      a volume hologram layer, on which an interference fringe is recorded, placed in contact with the resin layer and the inhibiting layer, in this order, and
   an inhibiting layer-formed region including the inhibiting layer and an inhibiting layer-non-formed region including no inhibiting layer differ in a color of a reproduction image from the volume hologram layer.

### Reference Signs List

1: substrate
1a: first substrate
1b: second substrate
2: resin layer
3: inhibiting layer
4: volume hologram layer
5: volume hologram laminate portion
6: releasing layer
7: protective layer
10: volume hologram laminate
20 volume hologram transfer foil
21: heat sealing layer
30: volume hologram label
31: adhesive layer
40: hologram sheet to be embedded
41: first heat sealing layer
42: second heat sealing layer
50: card
51: core sheet
52: transparent sheet
53: adhesive layer
54: photo image
55: character
60: hologram-adhered article

## Claims

1. A volume hologram laminate comprising a substrate, and a volume hologram laminate portion placed on one surface of the substrate, wherein
the volume hologram laminate portion includes, from a substrate side,
a resin layer including transparent resin;
an inhibiting layer placed in a pattern form, in contact with the resin layer; and
a volume hologram layer, on which an interference fringe is recorded, placed in contact with the resin layer and the inhibiting layer, in this order, and
an inhibiting layer-formed region including the inhibiting layer and an inhibiting layer-non-formed region including no inhibiting layer differ in a color of a reproduction image from the volume hologram layer.

2. The volume hologram laminate according to claim 1, wherein a reproduction wavelength of the inhibiting layer-non-formed region is shifted to a shorter wavelength side than a reproduction wavelength of the inhibiting layer-formed region.

3. The volume hologram laminate according to claim 2, wherein the color of the reproduction image of the inhibiting layer-formed region is green, and the color of the reproduction image of the inhibiting layer-non-formed region is blue.

4. The volume hologram laminate according to claim 1, wherein the interference fringe is not recorded on the resin layer.

5. The volume hologram laminate according to claim 1, wherein the inhibiting layer includes polyvinyl alcohol.

6. The volume hologram laminate according to claim 1, wherein a thickness of the resin layer is 0.5 um or more and 9 um or less.

7. A method for producing a volume hologram laminate, the method comprising:
a step of producing a resin layer side member by forming a resin layer, including transparent resin, on a first substrate, and forming an inhibiting layer, in a pattern form, on the resin layer so as to be in contact with the resin layer;
a step of producing a volume hologram layer side member by forming a volume hologram layer, including a photopolymerizable compound and a photopolymerization initiator, on a second substrate, and recording an interference fringe on the volume hologram layer;
a step of stacking the resin layer side member and the volume hologram layer side member so that the resin layer and the inhibiting layer in the resin layer side member and the volume hologram layer in the volume hologram layer side member are in contact; and
a step of heating a stack of the resin layer side member and the volume hologram layer side member.

8. A volume hologram transfer foil comprising:
the volume hologram laminate according to any one of claims 1 to 6; and
a heat sealing layer placed on a volume hologram laminate portion side surface of the volume hologram laminate.

9. A volume hologram label comprising:
the volume hologram laminate according to any one of claims 1 to 6; and
an adhesive layer placed on a volume hologram laminate portion side surface of the volume hologram laminate.

10. A volume hologram sheet to be embedded comprising:
the volume hologram laminate according to any one of claims 1 to 6;
a first heat sealing layer placed on a volume hologram laminate portion side surface of the volume hologram laminate; and
a second heat sealing layer placed on a substrate side surface of the volume hologram laminate.

11. A card comprising a core sheet; an adhesive layer; the volume hologram laminate according to any one of claims 1 to 6; and a transparent sheet, in this order.

12. The card according to claim 11 comprising a second adhesive layer between the volume hologram laminate and the transparent sheet.

13. A hologram-adhered article comprising an adherend, and a volume hologram laminate portion placed on one surface of the adherend via a heat sealing layer, wherein
the volume hologram laminate portion includes, from a side opposite to an adherend side,
a resin layer including transparent resin;
an inhibiting layer placed in a pattern form, in contact with the resin layer; and
a volume hologram layer, on which an interference fringe is recorded, placed in contact with the resin layer and the inhibiting layer, in this order, and
an inhibiting layer-formed region including the inhibiting layer and an inhibiting layer-non-formed region including no inhibiting layer differ in a color of a reproduction image from the volume hologram layer.
